# EUROPEAN PATENT APPLICATION

(11) **EP 4 365 636 A1**
(43) Date of publication of application: **08.05.2024**
(21) Application number: 22832503.1
(22) Date of filing: 24.03.2022
(51) Int. Cl.: G01S 19/21, G01S 19/22, G01S 19/45, G05D 1/02, A01B 69/00

(54) **MANAGEMENT SYSTEM FOR AGRICULTURAL MACHINES**

(30) Priority: 29.06.2021 JP 2021107444
(71) Applicant: Kubota Corporation, Osaka 556-8601 (JP)
(72) Inventor: KUBOTA, Yuki, Sakai-shi, Osaka 590-0823 (JP); TAMBO, Toru, Sakai-shi, Osaka 590-0823 (JP); OKUBO, Itsuki, Sakai-shi, Osaka 590-0823 (JP); OTA, Kazuki, Sakai-shi, Osaka 590-0823 (JP)
(74) Representative: Global IP Europe Patentanwaltskanzlei
(86) International application number: PCT/JP2022/013989
(87) International publication number: WO 2023/276340

(57) **Abstract**

A management system includes a storage device and a processing unit. While an agricultural machine including an GNSS receiver is traveling, the storage device stores GNSS data output from the GNSS receiver and sensing data output from a sensing device sensing a surrounding environment of the agricultural machine in association with each other. The processing unit generates and outputs visualized data, which represents the surrounding environment of the agricultural machine, based on the GNSS data and the sensing data, when reception interference of a satellite signal occurs.

## Description

### TECHNICAL FIELD

The present disclosure relates to management systems for agricultural machines.

### BACKGROUND ART

Research and development has been directed to the automation of agricultural machines to be used in agricultural fields. For example, work vehicles, such as tractors, combines, and rice transplanters, which automatically travel within fields by utilizing a positioning system, e.g., a GNSS (Global Navigation Satellite System), are coming into practical use. Research and development is also under way for work vehicles which automatically travel not only within fields, but also outside the fields (including public roads).

Patent Document 1 discloses a system that manages a signal strength distribution of satellite radio waves received by work vehicles that automatically travel in work fields by satellite navigation. In this system, in the case where the reception strength of radio waves detected by a satellite positioning module is lower than a predetermined threshold, a control unit of such a work vehicle generates information indicating that the reception strength is lowered. This information includes, for example, the receiving strengths of signals transmitted from a plurality of satellites, position data about the satellites (angles of elevation, angles of direction, etc.), information about the position of the work vehicle itself, the work field ID, and the like. The control unit transmits the information to a management computer. Based on the information, the management computer generates information indicating the distribution of the reception strengths of the satellite radio waves for each of the work fields. For example, the management computer generates map information indicating regions where the reception strengths are lowered in each work field by date and time. Such map information may be referred to, so that a work plan can be generated to allow the work vehicle to perform tasked travel efficiently even in a work field in which the regions, where the reception strengths are lowered in accordance with positions of the satellites and geographical states, are scattered.

### CITATION LIST

### PATENT LITERATURE

[Patent Document 1] Japanese Laid-Open Patent Publication No. 2018-132326

### SUMMARY OF INVENTION

### TECHNICAL PROBLEM

According to the technique disclosed in Japanese Laid-Open Patent Publication No. 2018-132326, information indicating the distribution of the reception strengths of the satellite radio waves in each work field by date and time may be generated. Based on the information, a path estimated not to have the reception strengths lowered may be generated, so that the work vehicle automatically can travel along the path. However, if an obstacle that was not present at the time of the generation of the information indicating the distribution of the reception strengths of the satellite radio waves is now present on or near the path, the reception strengths of the satellite radio waves are lowered, which may prevent positioning from being performed.

The present disclosure provides a technique to, in the case where reception interference such as decrease in the reception strength of a satellite signal occurs to an agricultural machine including a GNSS receiver, easily identify a cause of such reception interference.

### SOLUTION TO PROBLEM

This specification discloses the following techniques.

### [Item 1]

A management system, including:
a storage device to store, while an agricultural machine including an GNSS receiver is traveling, GNSS data output from the GNSS receiver and sensing data output from a sensing device to sense a surrounding environment of the agricultural machine in association with each other; and
a processing unit to generate and output visualized data, which represents the surrounding environment of the agricultural machine, based on the GNSS data and the sensing data, when reception interference of a satellite signal occurs.

### [Item 2]

The management system of item 1, wherein the processing unit:
further generates visualized data, which represents the surrounding environment of the agricultural machine, based on the GNSS data and the sensing data, when the reception interference is not occurring; and
outputs the visualized data when the reception interference is occurring and the visualized data when the reception interference is not occurring, in distinguishable forms.

### [Item 3]

The management system of item 2, further comprising a display device to display the visualized data when the reception interference is occurring and the visualized data when the reception interference is not occurring.

### [Item 4]

The management system of any one of items 1 to 3, wherein when the reception interference occurs, the processing unit further generates and outputs visualized data, which represents the surrounding environment of the agricultural machine, based on the GNSS data and the sensing data, at least before or after a period when the reception interference is occurring.

### [Item 5]

The management system of item 4, further comprising a display device to display the visualized data when the reception interference is occurring and the visualized data at least before or after the period when the reception interference is occurring.

### [Item 6]

The management system of any one of items 1 to 5, wherein:
the storage device stores the GNSS data and the sensing data in association with points of time while the agricultural machine is traveling, and
the processing unit generates, as the visualized data, data representing a motion picture of the surrounding environment of the agricultural machine, based on the GNSS data and the sensing data at each of the points of time, in a period when the reception interference is occurring.

### [Item 7]

The management system of any one of items 1 to 6, wherein the processing unit:
identifies the position of a satellite when the satellite signal is received, based on the GNSS data or satellite position data acquired from an external device; and
generates, as the visualized data, data representing an image including one or more marks, each representing the position of the satellite, superimposed on an image of the surrounding environment of the agricultural machine.

### [Item 8]

The management system of any one of items 1 to 7, wherein the visualized data includes information representing a reception level of the satellite signal received by the GNSS receiver.

### [Item 9]

The management system of any one of items 1 to 8, wherein:
the agricultural machine automatically travels based on the GNSS data;
the storage device stores the GNSS data and the sensing data during a portion of a time period when the agricultural machine is automatically traveling, the portion including a time period when the reception interference is occurring, and
the processing unit generates the visualized data during the portion of the time period.

### [Item 10]

The management system of any one of items 1 to 9, wherein:
the GNSS data includes information representing a reception level of the satellite signal and an estimated position of the agricultural machine,
the sensing data includes information representing an image of the surrounding environment of the agriculture machine, and
the storage device stores a database including the reception level, the estimated position, the image and information about a point of time.

### [Item 11]

The management system of any one of items 1 to 10, wherein the processing unit sends a notice to an external terminal device when the reception interference occurs.

### [Item 12]

The management system of any one of items 1 to 11, wherein the sensing device includes at least one of a camera or a LiDAR sensor provided in the agricultural machine.

### [Item 13]

The management system of any one of items 1 to 12, wherein:
the sensing device includes a plurality of cameras provided in the agricultural machine; and
the processing unit generates the visualized data by a process including synthesizing images output from the plurality of cameras.

### [Item 14]

The management system of any one of items 1 to 13, wherein the processing unit recognizes based on the sensing data, an object that causes the reception interference in the environment, and outputs an alert signal when recognizing the object.

### [Item 15]

A method to be executed by a computer, the method including:
causing, while an agricultural machine including a GNSS receiver is traveling, a storage device to store GNSS data output from the GNSS receiver and sensing data output from a sensing device sensing a surrounding environment of an agricultural machine in association with each other; and
generating and outputting visualized data, which represents the surrounding environment of the agricultural machine, based on the GNSS data and the sensing data, when reception interference of a satellite signal occurs.

General or specific aspects of the present disclosure may be implemented using a device, a system, a method, an integrated circuit, a computer program, a non-transitory computer-readable storage medium, or any combination thereof. The computer-readable storage medium may be inclusive of a volatile storage medium, or a non-volatile storage medium. The device may include a plurality of devices. In the case where the device includes two or more devices, the two or more devices may be disposed within a single apparatus, or divided over two or more separate apparatuses.

### ADVANTAGEOUS EFFECTS OF INVENTION

According to an embodiment of the present disclosure, it is possible to, in a case where reception interference such as a decrease in reception strength of a satellite signal occurs with regard to an agricultural machine including a GNSS receiver, easily identify a cause of the reception interference based on visualized data.

### BRIEF DESCRIPTION OF DRAWINGS

[FIG. **1**] FIG. **1** is a block diagram showing an example configuration of a system according to an illustrative embodiment.
[FIG. **2**] FIG. **2** is a diagram providing an overview of the system according to an illustrative embodiment.
[FIG. **3**] FIG. **3** is a side view schematically showing an example of a work vehicle and an example of implement.
[FIG. **4**] FIG. **4** is a block diagram showing an example configuration of the work vehicle, the implement, a terminal device and a management computer.
[FIG. **5**] FIG. **5** is a conceptual diagram showing an example of the work vehicle performing positioning based on an RTK-GNSS.
[FIG. **6**] FIG. **6** is a schematic diagram showing an example of an operational terminal and an example of operation switches provided inside a cabin.
[FIG. **7**] FIG. **7** is a diagram schematically showing an example of the work vehicle automatically traveling along a target path in a field.
[FIG. **8**] FIG. **8** is a flowchart showing an example operation of steering control to be performed by a controller during self-driving.
[FIG. **9A**] FIG. **9A** is a diagram showing an example of the work vehicle traveling along the target path.
[FIG. **9B**] FIG. **9B** is a diagram showing an example of the work vehicle at a position which is shifted rightward from the target path.
[FIG. **9C**] FIG. **9C** is a diagram showing an example of the work vehicle at a position which is shifted leftward from the target path.
[FIG. **9D**] FIG. **9D** is a diagram showing an example of the work vehicle oriented in an inclined direction with respect to the target path.
[FIG. **10**] FIG. **10** is a diagram schematically showing an example of travel log data.
[FIG. **11**] FIG. **11** is a diagram schematically showing an example of a state where a plurality of the work vehicles are automatically traveling inside the field and on a road outside the field.
[FIG. **12A**] FIG. **12A** is a diagram showing an example of an environment where reception interference may occur.
[FIG. **12B**] FIG. **12B** is a diagram showing another example of an environment where reception interference may occur.
[FIG. **13A**] FIG. **13A** is a graph showing an example of reception strengths of satellite signals in the case where no reception interference is occurring.
[FIG. **13B**] FIG. **13B** is a graph showing an example of reception strengths of the satellite signals in the case where reception interference is occurring.
[FIG. **14**] FIG. **14** shows an example of image displayed on a display device.
[FIG. **15**] FIG. **15** shows another example of image displayed on the display device.
[FIG. **16**] FIG. **16** shows still another example of image displayed on the display device.
[FIG. **17**] FIG. **17** is a flowchart showing an example operation of a processor of a management computer.

### DESCRIPTION OF EMBODIMENTS

Hereinafter, embodiments of the present disclosure will be described more specifically. Note, however, that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of the claims. In the following description, components or elements having identical or similar functions are denoted by identical reference numerals.

The following embodiments are only exemplary, and the techniques according to the present disclosure is not limited to the following embodiments. For example, numerical values, shapes, materials, steps, orders of steps, layout of a display screen, etc., that are indicated in the following embodiments are only exemplary, and admit of various modifications so long as it makes technological sense. Any one implementation may be combined with another so long as it makes technological sense to do so.

### (Overview of Embodiments)

A management system for agricultural machines according to an illustrative embodiment of the present disclosure includes a storage device and a processing unit. While an agricultural machine including a GNSS receiver is traveling, the storage device stores GNSS data output from the GNSS receiver and sensing data output from a sensing device to sense a surrounding environment of the agricultural machine in association with each other. Based on the GNSS data and the sensing data, the processing unit generates and outputs visualized data representing the surrounding environment of the agricultural machine when reception interference of a satellite signal is occurring to the GNSS receiver.

In the present disclosure, an "agricultural machine" means a machine for agricultural applications. Examples of agricultural machines include tractors, harvesters, rice transplanters, vehicles for crop management, vegetable transplanters, mowers, seeders, spreaders, and mobile robots for agriculture. Not only may a work vehicle (such as a tractor) function as an "agricultural machine" alone by itself, but also a combination of a work vehicle and an implement that is attached to, or towed by, the work vehicle may function as an "agricultural machine". For the ground surface within a field, an agricultural machine performs agricultural work such as tilling, seeding, preventive pest control, manure spreading, planting of crops, or harvesting. Such agricultural work or tasks may be referred to as "groundwork", or simply as "work" or "tasks". Travel of a vehicle-type agricultural machine performed while the agricultural machine also performs agricultural work may be referred to as "tasked travel".

A "GNSS receiver" is a device that receives radio waves transmitted from a plurality of satellites in the Global Navigation Satellite System (GNSS) and performs positioning based on a signal superimposed on the radio waves. GNSS is the general term for satellite positioning systems such as GPS (Global Positioning System), QZSS (Quasi-Zenith Satellite System), GLONASS, Galileo, and BeiDou. As used herein, satellites in these positioning systems will be referred to as "GNSS satellites". A signal transmitted from a GNSS satellite will be referred to as a "satellite signal". "GNSS data" is data output from the GNSS receiver. The GNSS data may be generated in a predetermined format such as, for example, the NMEA-0183 format. GNSS data may include, for example, information indicating receiving states of satellite signals received from individual satellites. For example, the GNSS data may include an identification number, an angle of elevation, an angle of direction, and a value indicating the reception strength of each of the satellites from which the satellite signals are received. Hereinafter, the reception strength may be referred to as a "reception level". The reception strength is a numerical value indicating the strength of the received satellite signal. The reception strength may be expressed by a value such as, for example, the Carrier to Noise Density Ratio (C/NO). The GNSS data may include positional information on the GNSS receiver or the agricultural machine as calculated based on the received plurality of satellite signals. The positional information may be expressed by, for example, the latitude, the longitude, and the altitude from the mean sea level, and the like. The GNSS data may further include information indicating the reliability of the positional information.

A "sensing device" is a device including one or more sensors. Such a sensor is disposed so as to sense a surrounding environment of the agricultural machine. The sensing device may include, for example, at least one of a camera including an image sensor (i.e., an imager) or a LiDAR (Light Detection and Ranging) sensor. "Sensing data" is data output from the sensing device. The sensing data may include, for example, image data generated by the camera, or point cloud data or distance distribution data generated by the LiDAR sensor. The point cloud data represents a distribution of a plurality of points, the distance between which is measured by the LiDAR sensor. The sensing data may be used, for example, by the agricultural machine traveling by self-driving to detect an obstacle, or by a user performing remote monitoring of the agricultural machine to check the surrounding environment of the agricultural machine. The sensing device may be provided in the agricultural machine or outside the agricultural machine. The sensing device provided outside the agricultural machine may include, for example, a plurality of cameras or a plurality of LiDAR sensors disposed along a path along which the agricultural machine travels.

"Reception interference of a satellite signal" means a state where the reliability of positioning is lowered, as compared with in a normal state, by deterioration in the receiving state of the satellite signal. The reception interference may occur, for example, in the case where the number of the detected satellites is small (e.g., 3 or smaller), in the case where the reception strength of each of the satellite signals is low, or in the case where multipath propagation occurs. The processing unit can determine whether the reception interference is occurring or not based on, for example, the information on the satellites included in the GNSS data. The processing unit can determine whether the reception interference is occurring or not based on, for example, the value of the reception strength of each of the satellites included in the GNSS data, the value of DOP (Dilution of Precision) indicating a positional arrangement of the satellites, or the like.

"Visualized data representing the surrounding environment of the agricultural machine" is data by which an image allowing the user to check the surrounding environment of the agricultural machine is displayed on a display. As used herein, displaying an image based on visualized data may be expressed as "displaying visualized data".

"Storing the GNSS data and the sensing data in association with each other" means storing the GNSS data and the sensing data corresponding to the GNSS data in a format readable by another device. For example, in order to associate GNSS data and sensing data generated at substantially the same point of time, the storage device may store such data and information on the point of time of the acquisition of such data in association with each other. Storing the GNSS data is not limited to storing the entirety of the GNSS data, but may be storing a portion of the GNSS data or storing data generated based on the GNSS data. Similarly, storing the sensing data is not limited to storing the entirety of the sensing data, but may be storing a portion of the sensing data or storing data generated based on the sensing data.

A "management system" is a computer system to manage the agricultural machine. The processing unit in the management system may be a computer including, for example, one or more processors and one or more memories. In this case, the processor can consecutively execute computer programs stored in the memory to realize desired processing. The processing unit may be mounted on the agricultural machine, or may be installed in a place far from the agricultural machine, for example, at the home or an office of the user monitoring the agricultural machine. One of a plurality of electronic control units (ECU) mounted on the agricultural machine may act as the processing unit. Alternatively, a server computer or an edge computer communicating with the agricultural machine via a network may act as the processing unit. Still alternatively, a terminal device used by the user may have at least a portion of functions of the processing unit. Examples of the processing unit include a stationary computer, a smartphone, a tablet computer, a laptop computer, and the like.

A storage device is a device that includes one or more storage mediums and is capable of storing data. Such a storage medium may be, for example, a semiconductor storage medium, a magnetic storage medium or an optical storage medium. The storage device and the processing unit may be disposed inside one device. Alternatively, the storage device and the processing unit may be disposed separately from each other and connected to each other via a network. The storage device may be provided in the agricultural machine.

According to an embodiment of the present disclosure, in the case where reception interference of a satellite signal is experienced by the GNSS receiver, the user can check the state of the surroundings of the agricultural machine from the image displayed based on the visualized data. This allows the user to confirm that, for example, an obstacle present around the agricultural machine hinders reception of the satellite signal.

An example of an obstacle hindering the reception of a satellite signal may be, for example, branches and leaves of a tree or a tall crop. The tree or the crop, even though not hindering the reception of a satellite signal at a certain moment, grows over time and may possibly cause reception interference. The above-described configuration allows the user to find out that such an obstacle is present on or near the path. Therefore, the user can cut a branch of the tree or remove the crop that causes the reception interference, and thus can prevent reception interference from occurring in the future. Another example of an obstacle that hinders the reception of a satellite signal may be a large vehicle such as a truck or the like. Such a large vehicle may act as an obstacle causing reception interference in the case where the agricultural machine travels, for example, at or near an edge of a field that is at a lower level than that of surrounding roads.

An agricultural machine according to the present disclosure may have a self-driving function. As used herein, "self-driving" means controlling the movement of an agricultural machine by the action of a controller, rather than through manual operations of a driver. An agricultural machine that performs self-driving may be referred to as a "self-driving agricultural machine" or a "robotic agricultural machine". During self-driving, not only the movement of the agricultural machine, but also the operation of agricultural work may be controlled automatically. In the case where the agricultural machine is a vehicle-type machine, traveling of the agricultural machine via self-driving will be referred to as "self-traveling". The controller may be configured or programmed to control at least one of: steering that is required in the movement of the agricultural machine; adjustment of the speed; and beginning and ending a travel. In the case of controlling a work vehicle having an implement attached thereto, the controller may be configured or programmed to control raising or lowering of the implement, beginning and ending of an operation of the implement, and so on. A move based on self-driving may include not only moving of an agricultural machine that goes along a predetermined path toward a destination, but also moving of an agricultural machine that follows a target of tracking. An agricultural machine that performs self-driving may also have the function of moving partly based on the user's instructions. Moreover, an agricultural machine that performs self-driving may operate not only in a self-driving mode but also in a manual driving mode, where the agricultural machine moves through manual operations of the driver. When performed not manually but through the action of a controller, the steering of a movable body will be referred to as "automatic steering". A portion of the controller may reside outside the agricultural machine. Control signals, commands, data, etc., may be communicated between the agricultural machine and a controller residing outside the agricultural machine. An agricultural machine that performs self-driving may move autonomously while sensing the surrounding environment, without any person being involved in the controlling of the movement of the agricultural machine. An agricultural machine that is capable of autonomous movement is able to travel within the field or outside the field (e.g., on roads) in an unmanned manner. During an autonomous move, operations of detecting and avoiding obstacles may be performed.

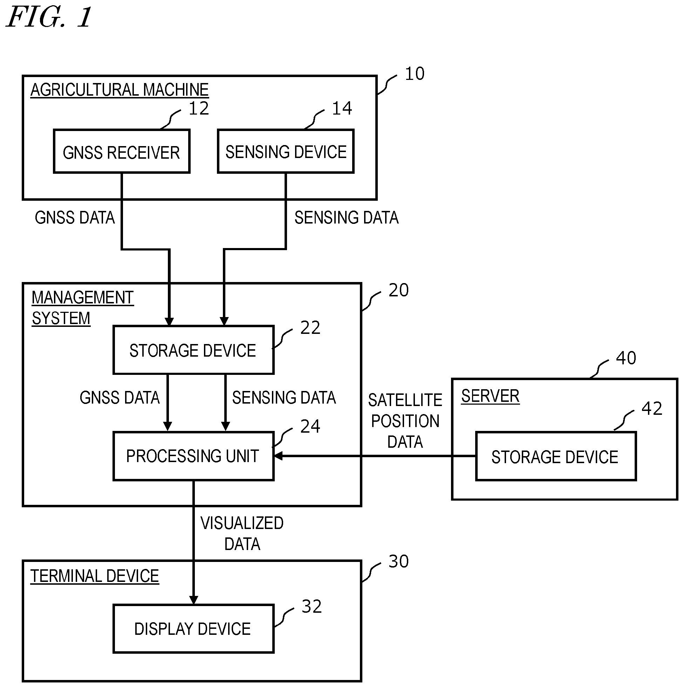

Now, an example configuration of the management system will be described in more detail with reference to FIG. **1****.**

FIG. **1** is a block diagram showing an example configuration of a management system **20** according to a illustrative embodiment. FIG. **1** shows an agricultural machine **10,** a terminal device **30** and a server computer **40** (hereinafter, referred to as a "server **40**") in addition to the management system **20.** The management system **20** is connected to the agricultural machine **10,** the terminal device **30** and the server **40** in a wired or wireless manner.

The server **40** includes a storage device **42** to store information on a position or an orbit of each of GNSS satellites. The server **40** transmits satellite position data representing the positions of the satellites to a processing unit **24** in response to a request of the processing unit **24.**

The agricultural machine **10** includes a GNSS receiver **12** and a sensing device **14.** The GNSS receiver **12** includes an antenna to receive satellite signals transmitted from the plurality of satellites, and a processing circuit to generate GNSS data by computation based on the satellite signals. The GNSS data may include positional information on the agricultural machine **10** and information on a receiving state of the satellite signal from each of the satellites (e.g., reception strength, etc.). The sensing device **14** may include, for example, a camera or a LiDAR sensor. The sensing device **14** senses a surrounding environment of the agricultural machine **10** and generates sensing data. The sensing data may be, for example, image data generated by the camera or point cloud data generated by the LiDAR sensor. In the example of FIG. 1, the sensing device **14** is a component element of the agricultural machine **10.** The agricultural machine **10** does not need to include the sensing device **14.** For example, the sensing device **14** may be disposed on or near a path along which the agricultural machine **10** travels.

During travel of the agricultural machine **10,** the GNSS data and the sensing data are transmitted to a storage device **22** and stored therein. The storage device **22** may be configured to store the GNSS data and the sensing data only while the agricultural machine **10** is travelling by self-driving. Alternatively, the storage device **22** may be configured to store the GNSS data and the sensing data also while the agricultural machine **10** is travelling by manual driving. During travel, the agricultural machine **10** may transmit the GNSS data and the sensing data to the storage device **22** at, for example, a certain cycle. Such GNSS data and sensing data may act as travel log data on the agricultural machine **10.**

The storage device **22** stores the GNSS data and the sensing data transmitted from the agricultural machine **10** in association with each other. The storage device **22** may store the GNSS data and the sensing data in association with, for example, points of time. This makes it easy for the processing unit **24** to acquire the GNSS data and the sensing data corresponding to a specific point of time. Based on the GNSS data and the sensing data acquired from the storage device **22,** the processing unit **24** generates visualized data representing the surrounding environment of the agricultural machine **10** when the reception interference of the satellite signals is occurring. It may be determined whether the reception interference is occurring or not based on the information on the receiving states of the satellite signals included in the GNSS data as described above. For example, the processing unit **24** may generate, as the visualized data, image data including an image based on the sensing data and information indicating that the reception interference is occurring (e.g., a letter(s), a graphic pattern(a), a symbol(s), etc.). Based on the GNSS data and the sensing data at each point of time, the processing unit **24** may generate, as the visualized data, data representing a motion picture of the surrounding environment of the agricultural machine **10** in a period when the reception interference is occurring.

The processing unit **46** transmits the generated visualized data to the terminal device **30.** The terminal device **30** is a device used by a user remotely monitoring the agricultural machine **10.** The terminal device **30** may be, for example, a computer such as a personal computer, a laptop computer, a tablet computer, a smartphone or the like. The terminal device **30** shown in FIG. **1** includes a display device **32.** The display device **32** may be an external display connected to the terminal device **30.** The display device **32** displays an image based on the visualized data. This allows the user to check the state of the surroundings of the agricultural machine **10** when the reception interference is occurring. For example, when finding an obstacle such as a branch of a tree or the like that was not present in the past at a site around the agricultural machine **10,** the user can take an action of, for example, going to the site in order to cut the branch. In this example, the display device **32** is provided outside the management system **20.** Alternatively, the management system **20** may include the display device **32.**

The processing unit **24** may generate visualized data when no reception interference is occurring as well as visualized data when reception interference is occurring. The processing unit **24** may output visualized data when reception interference is occurring and visualized data when no reception interference is occurring, in distinguishable forms. For example, the processing unit **24** may generate, as visualized data when reception interference is occurring, image data including information in the form of a letter(s), a symbol(s) or a graphic pattern(s) indicating that reception interference is occurring. By contrast, the processing unit **24** may generate, as visualized data when no reception interference is occurring, image data not including such information or image data including information indicating that the receiving state is good. The user can easily determine whether reception interference is occurring or not based on the image displayed on the terminal device **30.**

When reception interference occurs, the processing unit **24** may generate and output visualized data representing the surrounding environment of the agricultural machine **10** at least before or after the period when the reception interference is occurring, based on the GNSS data and the sensing data. This allows a cause of the reception interference to be identified more easily by a comparison between the visualized data in the period when the reception interference is occurring and the visualized data before or after the period.

The processing unit **24** can acquire satellite position data representing the positions of the GNSS satellites from the server **40.** The processing unit **24** may identify, based on the satellite position data, the positions of the satellites when the satellite signals are received, and generate visualized data representing an image in which one or more marks representing the positions of the satellites are superimposed on an image of the surrounding environment of the agricultural machine **10.** In the case where the GNSS data includes the information indicating the position of each of the satellites, the processing unit **24** can also generate similar visualized data based on the GNSS data. It should be noted that when reception interference is occurring, there are often cases where sufficient information on the positions of the satellites is not obtained from the GNSS data. Therefore, in the present embodiment, in the case where the information on the positions of the satellites is to be included in the visualized data when reception interference is occurring, the processing unit **24** acquires the satellite position data from an external device such as the server **40** or the like.

Visualized data may include information indicating reception levels of the satellite signals received by the GNSS receiver. The information indicating the reception levels may be, for example, a numerical value of the reception strength of each of the satellite signals included in the GNSS, or information such as a numerical value or a letter obtained by a calculation performed based on the above-mentioned numerical value. The information indicating the reception levels may indicate the reception levels by a plurality of stages. For example, the reception levels may be expressed by numerical values or letters of a three-stage system including, for example, "3 (high)", "2 (intermediate)" and "1 (low)". Alternatively, the reception levels may be expressed by a gauge.

The agricultural machine **10** may be configured to automatically travel based on the GNSS data. For example, the agricultural machine **10** may be configured to automatically travel based on positional information indicating results of positioning included in the GNSS data and information on a preset target path. The storage device **22** may store the GNSS data and the sensing data during only a portion of a period when the agricultural machine **10** is automatically traveling, the portion including a time period when reception interference is occurring. In this case, the processing unit **24** generates visualized data during only the portion of the time period. This can suppress the amount of the data to be stored, and thus can suppress the capacity of the storage device **22.**

As described above, the GNSS data may include information indicating the reception levels of the satellite signals and an estimated position of the agricultural machine **10.** In the case where the sensing device **14** includes a camera, the sensing data may include information indicating an image of the surrounding environment of the agricultural machine **10.** The storage device **22** may store a database including the reception levels of the satellite signals, the estimated position of the agricultural machine **10,** the image of the surrounding environment of the agricultural machine **10,** and information on the points of time. The storage of such a database allows the processing unit **24** to refer to the database and thus to generate visualized data efficiently.

When reception interference occurs, the processing unit **24** may transmit a notice of the reception interference to the external terminal device **30.** The processing unit **24** can detect the occurrence of the reception interference based on the GNSS data. Upon receipt of the notice, the terminal device **30** may display information such as a message indicating that the reception interference has occurred on the display device **32.** This allows the user to promptly notice that the reception interference of a satellite signal has occurred. The user can check the displayed image to promptly identify the cause of the reception interference.

The sensing device **14** may include at least one of the camera or the LiDAR sensor provided in the agricultural machine **10.** In this case, the sensing device **14** can generate sensing data based on image data output from the camera and/or point cloud data output from the LiDAR sensor. Based on such sensing data, the processing unit **24** can generate visualized data clearly representing the surrounding environment of the agricultural machine **10.**

The sensing device **14** may include a plurality of cameras provided in the agricultural machine **10.** In this case, the processing unit **24** may generate visualized data by a process including synthesizing images output from the plurality of cameras. This allows the processing unit **24** to generate visualized data representing a synthesized image covering a wide range (e.g., 180°, 270°, 360°, etc.) around the agricultural machine **10.** This allows the user to check the state of the surroundings of the agricultural machine **10** in more detail, and thus to identify the cause of the reception interference easily.

The processing unit **24** may recognize an object that causes reception interference in the environment based on sensing data, and present an alert signal when recognizing the object. For example, the processing unit **24** can recognize an object that causes reception interference based on an image or a point cloud represented by the sensing data, satellite position data acquired from the server **40,** and information indicating the receiving states of satellite signals included in GNSS data. The processing unit **24** may transmit an alert signal to, for example, the terminal device **30.** Upon receipt of the alert signal, the terminal device **30** can display a warning message on the display device **32** or cause a loudspeaker to output an alarm sound. This allows the user to recognize that there is an object that causes reception interference. The processing unit **24** may transmit an alert signal to a controller of the agricultural machine **10.** Upon receipt of the alert signal, the controller of the agricultural machine **10** may sound a buzzer, activate an alarm light, or stop traveling. This allows the agricultural machine **10** to stop safely or allows people around the agricultural machine **10** to be alerted by the buzzer or the alarm light when reception interference is occurring and thus the reliability of positioning is low.

A method for managing an agricultural machine according to another embodiment of the present disclosure is a method to be executed by a computer. The method includes: causing, during travel of the agricultural machine including a GNSS receiver, a storage device to store GNSS data output from the GNSS receiver and sensing data output from a sensing device sensing a surrounding environment of the agricultural machine in association with each other; and generating and outputting visualized data representing the surrounding environment of the agricultural machine based on the GNSS data and the sensing data when reception interference of a satellite signal is occurring.

A computer program according to still another embodiment of the present disclosure is stored on a non-transitory computer-readable storage medium. The computer program causes a computer to execute: causing, during travel of an agricultural machine including a GNSS receiver, a storage device to store GNSS data output from the GNSS receiver and sensing data output from a sensing device sensing a surrounding environment of the agricultural machine in association with each other; and generating and outputting visualized data representing the surrounding environment of the agricultural machine based on the GNSS data and the sensing data when reception interference of a satellite signal is occurring.

### (Embodiment 1)

Hereinafter, an embodiment will be described where the techniques according to the present disclosure are applied to a work vehicle (e.g., a tractor) as an example of an agricultural machine. The techniques according to the present disclosure are applicable not only to work vehicles such as tractors, but also to other types of agricultural machines.

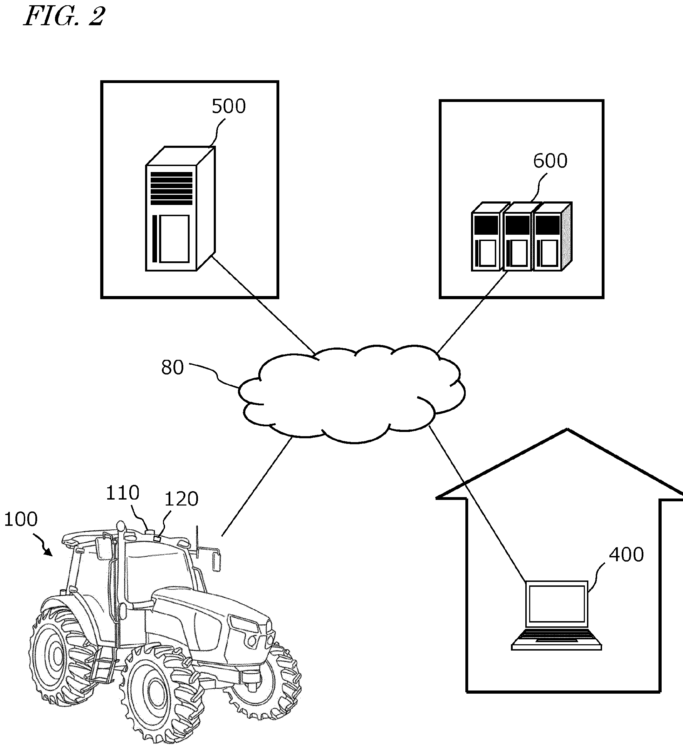

FIG. **2** is a diagram providing an overview of a system according to an illustrative embodiment of the present disclosure. FIG. **2** shows a work vehicle **100,** a terminal device **400** to remotely monitor the work vehicle **100,** a management computer **500,** and a streaming server **600** to stream positional information on each of satellites. In the present embodiment, the work vehicle **100,** the terminal device **400,** the management computer **500** and the streaming server **600** respectively correspond to the agricultural machine **10,** the terminal device **30,** the management system **20,** and the server **40** shown in FIG. **1****.** The work vehicle **100** and the terminal device **400** can communicate with the management computer **500** via a network **80.** The management computer **500** can acquire satellite position data from the streaming server **600** via the network **80.**

In the present embodiment, the work vehicle **100** is a tractor. The tractor can have an implement attached to its rear and/or its front. While performing agricultural work according to the particular type of implement, the tractor is able to automatically travel within a field. The techniques according to the present embodiment are similarly applicable to agricultural machines other than tractors so long as it makes sense.

The work vehicle **100** has a self-driving function. In other words, the work vehicle **100** travels by the action of a controller, rather than manually. The controller according to the present embodiment is provided inside the work vehicle **100,** and is able to control both the speed and steering of the work vehicle **100.**

The work vehicle **100** includes a positioning device **110** including a GNSS receiver. Based on the position of the work vehicle **100** as identified by the positioning device **110** and a target path stored in a storage device previously, the controller causes the work vehicle **100** to automatically travel. In addition to controlling the travel of the work vehicle **100,** the controller also controls the operation of the implement. As a result, while automatically traveling, the work vehicle **100** is able to perform a task (work) by using the implement.

The work vehicle **100** also includes a sensing device to detect obstacles. The sensing device may include, for example, a camera **120.** The camera **120** generates image data for use in remote monitoring. The controller of the work vehicle **100** consecutively transmits the image data acquired by the camera **120** to the management computer **500.** The sensing device may include a LiDAR sensor. The controller of the work vehicle **100** may consecutively transmit point cloud data or distance distribution data generated by the LiDAR sensor to the management computer **500.** Hereinafter, an example in which the sensing device includes the camera **120** and outputs image data generated by the camera **120** as sensing data will be mainly described.

The management computer **500** is a computer to realize the above-described functions of the management system. The management computer **500** may be, for example, a server computer that performs centralized management on information regarding the field on the cloud and supports agriculture by use of the data on the cloud. The management computer **500** receives GNSS data output from the positioning device **110** of the work vehicle **100** and sensing data output from the sensing device, and causes the storage device to store the GNSS data and the sensing data. Based on the GNSS data and the sensing data, the management computer **500** generates visualized data representing the surrounding environment of the work vehicle **100.** Based on the satellite position data acquired from the streaming server **600,** the management computer **500** may generate visualized data including the information on the positions of the satellites. The management computer **500** transmits the generated visualized data to the terminal device **400.**

The terminal device **400** is a computer that is used by a user who is at a remote place from the work vehicle **100.** The terminal device **400** may be provided at the home or an office of the user, for example. The terminal device **400** may be a mobile terminal such as, for example, a laptop computer, a smartphone or a tablet computer, or a stationary computer such as a desktop PC (Personal Computer). The terminal device **400** causes a display to display a video based on the visualized data transmitted from the management computer **500.** By watching the video on the display, the user is able to grasp the state of the surroundings of the work vehicle **100.**

Hereinafter, the configuration and operation of a system according to the present embodiment will be described in more detail.

### [1. Configuration]

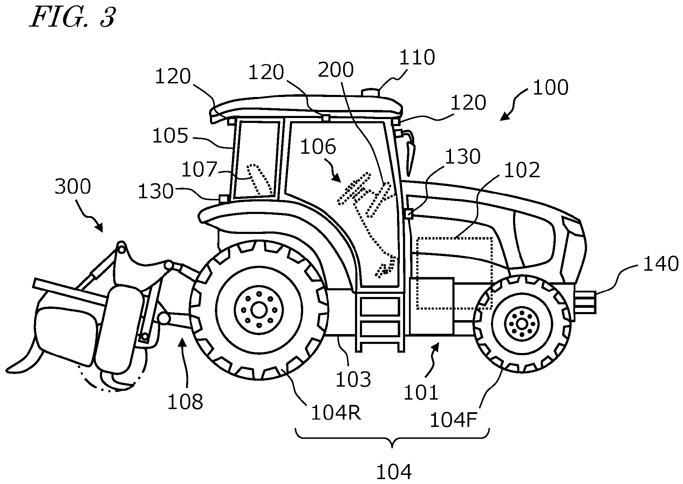

FIG. **3** is a side view schematically showing an example of the work vehicle **100** and an example of the implement **300** linked to the work vehicle **100.** The work vehicle **100** according to the present embodiment functions in both a manual driving mode and a self-driving mode. In the self-driving mode, the work vehicle **100** is able to perform unmanned travel. The work vehicle **100** may be configured to perform self-driving both inside the field and outside the field (including roads).

As shown in FIG. **3****,** the work vehicle **100** includes a vehicle body **101,** a prime mover (engine) **102,** and a transmission **103.** On the vehicle body **101,** tires (wheels) **104** and a cabin **105** are provided. The wheels **104** include a pair of front wheels **104F** and a pair of rear wheels **104R.** Inside the cabin **105,** a driver's seat **107,** a steering device **106,** an operational terminal **200,** and switches for manipulation are provided. In the case where the work vehicle **100** performs tasked travel inside the field, the front wheels **104F** and/or the rear wheels **104R** may be crawlers, rather than tires.

The work vehicle **100** shown in FIG. **3** further includes a plurality of the cameras **120.** The cameras **120** may be provided at the front/rear/right/left of the work vehicle **100,** for example. The cameras **120** capture images of the surrounding environment of the work vehicle **100,** and generate image data. The images acquired by the cameras **120** are transmitted to the terminal device **400,** which is responsible for remote monitoring, via the management computer **500.** The images are used to monitor the work vehicle **100** during unmanned driving.

The work vehicle **100** further includes the positioning device **110.** The positioning device **110** includes a GNSS receiver. The GNSS receiver includes an antenna to receive a signal(s) from a GNSS satellite(s) and a processor to calculate the position of the work vehicle **100** based on the signal(s) received by the antenna. The positioning device **110** receives satellite signals transmitted from the plurality of GNSS satellites, and performs positioning based on the satellite signals. Although the positioning device **110** in the present embodiment is disposed above the cabin **105,** it may be disposed at any other position.

The positioning device **110** may include an inertial measurement unit (IMU). Signals from the inertial measurement unit (IMU) can be utilized to complement position data. The IMU can measure a tilt or a small motion of the work vehicle **100.** The data acquired by the IMU can be used to complement the position data based on the satellite signals, so as to improve the performance of positioning.

The work vehicle **100** shown in FIG. **3** further includes a LiDAR sensor **140.** The LiDAR sensor **140** in this example is disposed on a bottom portion of a front surface of the vehicle body **101.** The LiDAR sensor **140** may be disposed at another position. During travel of the work vehicle **100,** the LiDAR sensor **140** repeatedly outputs sensing data representing the distance and the direction between measurement points on objects present in the surrounding environment thereof, or a two-dimensional or three-dimensional coordinate values of the measurement points. The sensing data output from the LiDAR sensor **140** is processed by the controller of the work vehicle **100.** The controller can utilize an algorithm such as, for example, SLAM (Simultaneous Localization and Mapping) to execute a process of, for example, generating an environment map based on the sensing data. The environment map may be generated by another computer such as, for example, the management computer **500** outside the work vehicle **100.** The sensing data output from the LiDAR senser **140** may also be used to detect obstacles.

The positioning device **110** may utilize the data acquired by the cameras **120** or the LIDAR senser **140** for positioning. When objects serving as characteristic points exist in the environment that is traveled by the work vehicle **100,** the position of the work vehicle **100** can be estimated with a high accuracy based on data that is acquired by the cameras **120** or the LiDAR sensor **140** and an environment map that is previously recorded in the storage device. By correcting or complementing position data based on the satellite signals using the data acquired by the cameras **120** or the LiDAR sensor **140,** it becomes possible to identify the position of the work vehicle **100** with a higher accuracy.

The work vehicle **100** further includes a plurality of obstacle sensors **130.** In the example shown in FIG. **3****,** the obstacle sensors **130** are provided at the front and the rear of the cabin **105.** The obstacle sensors **130** may be disposed at other positions. For example, one or more obstacle sensors **130** may be disposed at any position at the sides, the front or the rear of the vehicle body **101.** The obstacle sensors **130** may be used to detect obstacles in the surroundings of the work vehicle **100** during self-traveling to cause the work vehicle **100** to stop or detour around the obstacles.

The prime mover **102** may be a diesel engine, for example. Instead of a diesel engine, an electric motor may be used. The transmission **103** can change the propulsion and the moving speed of the work vehicle **100** through a speed changing mechanism. The transmission **103** can also switch between forward travel and backward travel of the work vehicle **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the work vehicle **100.** The steering angle of the front wheels **104F** can be changed by manipulating the steering wheel. The power steering device includes a hydraulic device or an electric motor to supply an assisting force to change the steering angle of the front wheels **104F.** When automatic steering is performed, under the control of a controller disposed in the work vehicle **100,** the steering angle may be automatically adjusted by the power of the hydraulic device or the electric motor.

A linkage device **108** is provided at the rear of the vehicle body **101.** The linkage device **108** includes, e.g., a three-point linkage (also referred to as a "three-point link" or a "three-point hitch"), a PTO (Power Take Off) shaft, a universal joint, and a communication cable. The linkage device **108** allows the implement **300** to be attached to, or detached from, the work vehicle **100.** The linkage device **108** is able to raise or lower the three-point link with a hydraulic device, for example, thus changing the position and/or attitude of the implement **300.** Moreover, motive power can be sent from the work vehicle **100** to the implement **300** via the universal joint. While towing the implement **300,** the work vehicle **100** allows the implement **300** to perform a predetermined task. The linkage device may be provided frontward of the vehicle body **101.** In that case, the implement may be connected frontward of the work vehicle **100.**

Although the implement **300** shown in FIG. **3** is a rotary tiller, the implement **300** is not limited to a rotary tiller. For example, any arbitrary implement such as a seeder, a spreader, a transplanter, a mower, a rake implement, a baler, a harvester, a sprayer, or a harrow, may be connected to the work vehicle **100** for use.

The work vehicle **100** shown in FIG. **3** can be driven by human driving; alternatively, it may only support unmanned driving. In that case, component elements which are only required for human driving, e.g., the cabin **105,** the steering device **106,** and the driver's seat **107** do not need to be provided in the work vehicle **100.** An unmanned work vehicle **100** may travel via autonomous driving, or by remote manipulation by a user.

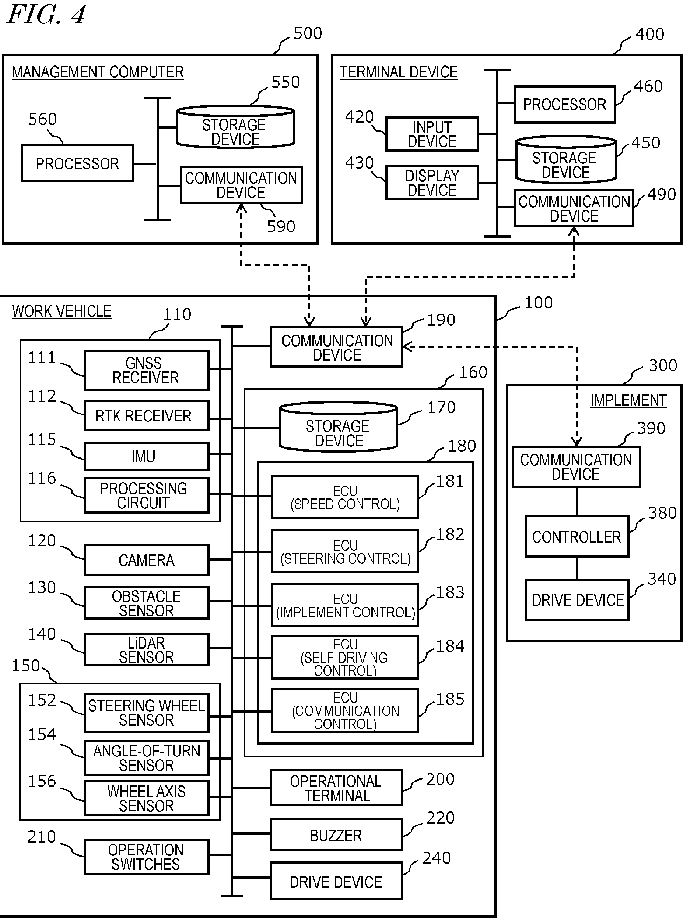

FIG. **4** is a block diagram showing an example configuration of the work vehicle **100,** the implement **300,** the terminal device **400** and the management computer **500.** The work vehicle **100** and the implement **300** can communicate with each other via a communication cable that is included in the linkage device **108.** The work vehicle **100,** the terminal device **400** and the management computer **500** are able to communicate with each other via the network **80.**

In addition to the positioning device **110,** the cameras **120,** the obstacle sensors **130,** the LiDAR sensor **140** and the operational terminal **200,** the work vehicle **100** in the example of FIG. **4** includes sensors **150** to detect the operating status of the work vehicle **100,** a control system **160,** a communication device **190,** operation switches **210,** a buzzer **220,** and a drive device **240.** The positioning device **110** includes a GNSS receiver **111,** an RTK receiver **112,** an inertial measurement unit (IMU) **115,** and a processing circuit **116.** The sensors **150** include a steering wheel sensor **152,** an angle-of-turn sensor **154,** and a wheel axis sensor **156.** The control system **160** includes a storage device **170** and a controller **180.** The controller **180** includes a plurality of electronic control units (ECU) **181** to **185.** The implement **300** includes a drive device **340,** a controller **380,** and a communication device **390.** The terminal device **400** includes an input device **420,** a display device **430,** a storage device **450,** a processor **460,** and a communication device **490.** The management computer **500** includes a storage device **550,** a processor **560,** and a communication device **590.** The processor **560** corresponds to the processing unit **24** shown in FIG. **1****.** Note that FIG. **4** shows component elements which are relatively closely related to the operations of self-driving by the work vehicle **100,** while other components are omitted from illustration.

The GNSS receiver **111** in the positioning device **110** receives satellite signals transmitted from a plurality of GNSS satellites and generates GNSS data based on the satellite signals. The GNSS data may be generated in a predetermined format such as, for example, the NMEA-0183 format. The GNSS data may include, for example, the identification number, the angle of elevation, the angle of direction, and a value representing the reception strength of each of satellites from which the satellite signals are received. The reception strength may be expressed by a value of, for example, the carrier-to-noise power density (C/NO) or the like. The GNSS data may also include positional information on the work vehicle **100** as calculated based on the plurality of received satellite signals, and also include information indicating the reliability of the positional information. The positional information may be expressed by, for example, the latitude, the longitude, the altitude from the mean sea level, and the like. The reliability of the positional information may be expressed by, for example, a DOP value, which indicates the positional arrangement of the satellites.

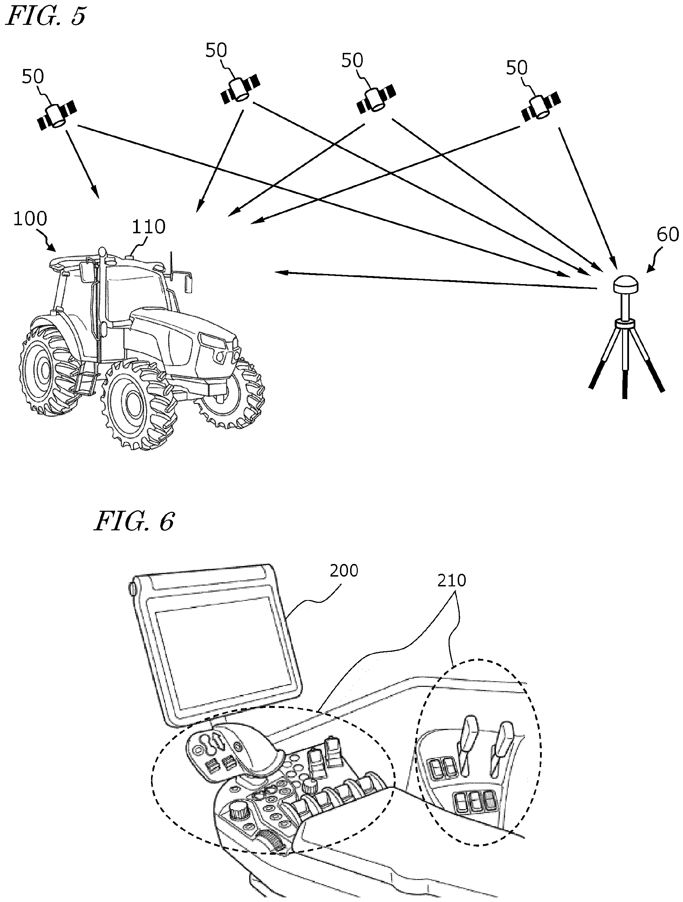

The positioning device **110** shown in FIG. **4** performs positioning of the work vehicle **100** by utilizing an RTK (Real Time Kinematic)-GNSS. FIG. **5** is a conceptual diagram showing an example of the work vehicle **100** performing positioning based on the RTK-GNSS. In the positioning based on the RTK-GNSS, not only satellite signals transmitted from a plurality of GNSS satellites **50,** but also a correction signal that is transmitted from a reference station **60** is used. The reference station **60** may be disposed near the field that is traveled by the work vehicle **100** (e.g., at a position within 1 km of the work vehicle **100**). The reference station **60** generates a correction signal of, for example, an RTCM format based on the satellite signals received from the plurality of GNSS satellites **50,** and transmits the correction signal to the positioning device **110.** The RTK receiver **112,** which includes an antenna and a modem, receives the correction signal transmitted from the reference station **60.** Based on the correction signal, the processing circuit **116** of positioning device **110** corrects results of the positioning performed by use of the GNSS receiver **111.** Use of the RTK-GNSS enables positioning with an accuracy on the order of several centimeters of errors, for example. Positional information (including latitude, longitude, and altitude information) is acquired through the highly accurate positioning by the RTK-GNSS. The positioning device **110** calculates the position of the work vehicle **100** as frequently as, for example, one to ten times per second.

Note that the positioning method is not limited to being performed by use of an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System). In the case where positional information with the necessary accuracy can be obtained without the use of the correction signal transmitted from the reference station **60,** positional information may be generated without using the correction signal. In that case, the positioning device **110** does not need to include the RTK receiver **112.**

The positioning device **110** in the present embodiment further includes the IMU **115.** The IMU **115** includes a 3-axis accelerometer and a 3-axis gyroscope. The IMU **115** may include a direction sensor such as a 3-axis geomagnetic sensor. The IMU **115** functions as a motion sensor which can output signals representing parameters such as acceleration, velocity, displacement, and attitude of the work vehicle 100. Based not only on the satellite signals and the correction signal but also on a signal that is output from the IMU **115,** the processing circuit **116** can estimate the position and orientation of the work vehicle **100** with a higher accuracy. The signal that is output from the IMU **115** may be used for the correction or complementation of the position that is calculated based on the satellite signals and the correction signal. The IMU **115** outputs a signal more frequently than the GNSS receiver **111.** Utilizing this signal that is output highly frequently, the processing circuit **116** allows the position and orientation of the work vehicle **100** to be measured more frequently (e.g., about 10 Hz or above). Instead of the IMU **115,** a 3-axis accelerometer and a 3-axis gyroscope may be separately provided. The IMU **115** may be provided as a separate device from the positioning device **110.**

In the example of FIG. **4****,** the processing circuit **116** calculates the position of the work vehicle **100** based on the signals which are output from the GNSS receiver **111,** the RTK receiver **112** and the IMU **115.** The processing circuit **116** may further estimate or correct the position of the work vehicle **100** based on the data acquired by the cameras **120** or the LiDAR sensor **140.** Use of the data acquired by the cameras **120** or the LiDAR sensor **140** allows the accuracy of positioning to be further improved.

The calculation of the position is not limited to being performed by the positioning device **110,** and may be performed by any other device. For example, the controller **180** or an external computer may acquire output data from each of the receivers and each of the sensors as is required for positioning, and estimate the position of the work vehicle **100** based on such data.

The cameras **120** are imagers that image the surrounding environment of the work vehicle **100.** Each of the cameras **120** includes an image sensor such as a CCD (Charge Coupled Device) or a CMOS (Complementary Metal Oxide Semiconductor), for example. In addition, each camera **120** may include an optical system including one or more lenses and a signal processing circuit. During travel of the work vehicle **100,** the cameras **120** image the surrounding environment of the work vehicle **100,** and generate image data (e.g., motion picture data). The cameras **120** are able to capture motion pictures at a frame rate of 3 frames/second (fps: frames per second) or greater, for example. The images generated by the cameras **120** may be used when a remote supervisor checks the surrounding environment of the work vehicle **100** with the terminal device **400,** for example. The images generated by the cameras **120** may also be used for the purpose of positioning and/or detection of obstacles. As shown in FIG. **3****,** the plurality of cameras **120** may be provided at different positions on the work vehicle **100,** or a single camera **120** may be provided. A visible camera(s) to generate visible light images and an infrared camera(s) to generate infrared images may be separately provided. Both of a visible camera(s) and an infrared camera(s) may be provided as cameras to generate images for monitoring purposes. The infrared camera(s) may also be used for detection of obstacles at nighttime.

The obstacle sensors **130** detect objects around the work vehicle **100.** Each of the obstacle sensors **130** may include a laser scanner or an ultrasonic sonar, for example. When an object exists at a position within a predetermined distance from the obstacle sensor **130,** the obstacle sensor **130** outputs a signal indicating the presence of the obstacle. The plurality of obstacle sensors **130** may be provided at different positions on the work vehicle **100.** For example, a plurality of laser scanners and a plurality of ultrasonic sonars may be disposed at different positions on the work vehicle **100.** Providing such a great number of obstacle sensors **130** can reduce blind spots in monitoring obstacles around the work vehicle **100.**

The steering wheel sensor **152** measures the angle of rotation of the steering wheel of the work vehicle **100.** The angle-of-turn sensor **154** measures the angle of turn of the front wheels **104F,** which are the wheels responsible for steering. Measurement values by the steering wheel sensor **152** and the angle-of-turn sensor **154** are used for steering control by the controller **180.**

The wheel axis sensor **156** measures the rotational speed, i.e., the number of revolutions per unit time, of a wheel axis that is connected to a tire **104.** The wheel axis sensor **156** may be a sensor including a magnetoresistive element (MR), a Hall generator, or an electromagnetic pickup, for example. The wheel axis sensor **156** outputs a numerical value indicating the number of revolutions per minute (unit: rpm) of the wheel axis, for example. The wheel axis sensor **156** is used to measure the speed of the work vehicle **100.**

The drive device **240** includes various types of devices required to cause the work vehicle **100** to travel and to drive the implement **300;** for example, the prime mover **102,** the transmission **103,** the steering device **106,** the linkage device **108** and the like described above. The prime mover **102** may include an internal combustion engine such as, for example, a diesel engine. The drive device **240** may include an electric motor for traction instead of, or in addition to, the internal combustion engine.

The storage device **170** includes one or more storage mediums such as a flash memory or a magnetic disc. The storage device **170** stores various data that is generated by the positioning device **110,** the cameras **120,** the obstacle sensors **130,** the sensors **150,** and the controller **180.** The data that is stored by the storage device **170** may include map data on the environment that is traveled by the work vehicle **100** (may also be referred to as an "environment map"), and data on a target path for self-driving. The environment map and the target path may be generated by the controller **180** itself or generated by the processor **560** in the management computer **500.** The storage device **170** also stores a computer program(s) to cause each of the ECUs in the controller **180** to perform various operations (to be described later). Such a computer program(s) may be provided to the work vehicle **100** via a storage medium (e.g., a semiconductor memory, an optical disc, etc.) or through telecommunication lines (e.g., the Internet). Such a computer program(s) may be marketed as commercial software.

The controller **180** includes the plurality of ECUs. The plurality of ECUs may include, for example, the ECU **181** for speed control, the ECU **182** for steering control, the ECU **183** for implement control, the ECU **184** for self-driving control, and the ECU **185** for communication control. The ECU **181** controls the prime mover **102,** the transmission **103** and brakes included in the drive device **240,** thus controlling the speed of the work vehicle **100.** The ECU **182** controls the hydraulic device or the electric motor included in the steering device **106** based on a measurement value of the steering wheel sensor **152,** thus controlling the steering of the work vehicle **100.** In order to cause the implement **300** to perform a desired operation, the ECU **183** controls the operation of the three-point link, the PTO shaft and the like that are included in the linkage device **108.** Also, the ECU **183** generates a signal to control the operation of the implement **300,** and transmits this signal from the communication device **190** to the implement **300.** Based on signals which are output from the positioning device **110,** the steering wheel sensor **152,** the angle-of-turn sensor **154** and the wheel axis sensor **156,** the ECU **184** performs computation and control for achieving self-driving. During self-driving, the ECU **184** sends the ECU **181** a command value to change the speed, and sends the ECU **182** a command value to change the steering angle. Based on the command value to change the speed, the ECU **181** controls the prime mover **102,** the transmission **103,** or the brakes to change the speed of the work vehicle **100.** Based on the command value to change the steering angle, the ECU **182** controls the steering device **106** to change the steering angle. The ECU **185** controls communication with another device performed by the communication device **190.** During travel of the work vehicle **100,** the ECU **185** controls the communication device **190** to transmit, to the management computer **500,** the GNSS data output from the GNSS receiver **111** and the image data output from the cameras **120.** The ECU **185** may transmit only a portion of the GNSS data, instead of the entirety thereof, to the management computer **500.** Among the GNSS data, for example, only information indicating the reception strength of each satellite signal or only information indicating the reliability of positioning may be transmitted to the management computer **500.** The data to be transmitted to the management computer **500** may include information indicating the estimated position of the work vehicle **100** as calculated by the processing circuit **116.**

Through the action of these ECUs, the controller **180** realizes self-driving and communication with another device. During self-driving, the controller **180** controls the drive device **240** based on the position of the work vehicle **100** as measured or estimated by the positioning device **110** and the target path stored in the storage device **170.** As a result, the controller **180** can cause the work vehicle **100** to travel along the target path.

The plurality of ECUs included in the controller **180** may communicate with one another according to a vehicle bus standard such as, for example, a CAN (Controller Area Network). Instead of the CAN, faster communication methods may be used, e.g., Automotive Ethernet (registered trademark). Although the ECUs **181** to **185** are illustrated as individual corresponding blocks in FIG. **4****,** each of these functions may be implemented by a plurality of ECUs. Alternatively, an onboard computer that integrates the functions of at least some of the ECUs **181** to **185** may be provided. The controller **180** may include ECUs other than the ECUs **181** to **185,** and any number of ECUs may be provided in accordance with functionality. Each ECU includes a processing circuit including one or more processors.

The communication device **190** is a device including an antenna and a circuit to communicate with the implement **300,** the management computer **500** and the terminal device **400.** The communication device **190** includes circuitry to perform exchanges of signals complying with an ISOBUS standard such as ISOBUS-TIM, for example, between itself and the communication device **390** of the implement **300.** This allows the implement **300** to perform a desired operation, or allows information to be acquired from the implement **300.** The communication device **190** may further include an antenna and a communication circuit to exchange signals via the network **80** between the communication device **490** of the terminal device **400** and the communication device **590** of the management computer **500.** The network **80** may include a 3G, 4G, 5G, or any other cellular mobile communications network and the Internet, for example. The communication device **190** may have the function of communicating with a mobile terminal that is used by a supervisor who is situated near the work vehicle **100.** With such a mobile terminal, communication may be performed based on any arbitrary wireless communication standard, e.g., Wi-Fi (registered trademark), 3G, 4G, 5G or any other cellular mobile communication standard, or Bluetooth (registered trademark).

The buzzer **220** is an audio output device to present an alarm sound to alert the user of an abnormality. For example, the buzzer **220** may present an alarm sound when an obstacle is detected during self-driving. The buzzer **220** is controlled by the controller **180.**

The operational terminal **200** is a terminal for the user to perform a manipulation related to the travel of the work vehicle **100** and the operation of the implement **300,** and may also be referred to as a virtual terminal (VT). The operational terminal **200** may include a display device such as a touch screen panel, and/or one or more buttons. The display device may be a display such as a liquid crystal display or an organic light-emitting diode (OLED) display, for example. By manipulating the operational terminal **200,** the user can perform various manipulations, such as, for example, switching ON/OFF the self-driving mode, setting a target path, recording or editing an environment map, and switching ON/OFF the implement **300.** At least a portion of these manipulations may also be realized by manipulating the operation switches **210.** The operational terminal **200** may be configured so as to be detachable from the work vehicle **100.** A user who is at a remote place from the work vehicle **100** may manipulate the detached operational terminal **200** to control the operation of the work vehicle **100.** Instead of the operational terminal **200,** the user may manipulate a computer on which necessary application software is installed, for example, the terminal device **400,** to control the operation of the work vehicle **100.**

The drive device **340** in the implement **300** performs a necessary operation for the implement **300** to perform a predetermined task. The drive device **340** includes a device adapted to the intended use of the implement **300,** e.g., a hydraulic device, an electric motor, or a pump. The controller **380** controls the operation of the drive device **340.** In response to a signal that is transmitted from the work vehicle **100** via the communication device **390,** the controller **380** causes the drive device **340** to perform various operations. Moreover, a signal that is in accordance with the state of the implement **300** may be transmitted from the communication device **390** to the work vehicle **100.**

The input device **420** in the terminal device **400** is a device that accepts input operations from the user. The input device **420** may include a mouse, a keyboard, or one or more buttons or switches, for example. The display device **430** may be a display such as a liquid crystal display or an OLED display, for example. The input device **420** and the display device **430** may be implemented as a touch screen panel. The storage device **450** includes one or more storage mediums, such as a semiconductor storage medium and a magnetic storage medium. The storage device **450** stores a computer program(s) to be executed by the processor **460** and various data that is generated by the processor **460.** The processor **460** operates by executing the computer program(s) stored in the storage device **450.** In response to the manipulation made by the user via the input device **420,** the processor **460** causes the display device **430** to display an image based on visualized data generated by the management computer **500.**

The storage device **550** in the management computer **500** includes one or more storage mediums such as a semiconductor storage medium and a magnetic storage medium. The storage device **550** stores a computer program(s) to be executed by the processor **560** and various data generated by the processor **560.** The storage device **550** stores information included in GNSS data output from the GNSS receiver **111** and image data output from the cameras **120** in association with each other. For example, the storage device **550** may store a database that associates information indicating the reception levels of the satellite signals included in the GNSS data, the image data, and the time/date of acquisition of the information and the image data. The database may further include information on the identification number of the work vehicle **100.**

The processor **560** operates by executing the computer program(s) stored in the storage device **550.** The processor **560** can refer to the database stored in the storage device **550** and thus generate visualized data representing the surrounding environment of the work vehicle **100.**

FIG. **6** is a schematic diagram showing an example of the operational terminal **200** and an example of the operation switches **210** both provided in the cabin **105.** In the cabin **105,** the switches **210,** including a plurality of switches that are manipulable by the user, are disposed. The operation switches **210** may include, for example, a switch to select the gear shift as to a main gear shift or a range gear shift, a switch to switch between a self-driving mode and a manual driving mode, a switch to switch between forward travel and backward travel, a switch to raise or lower the implement **300,** and the like. In the case where the work vehicle **100** only performs unmanned driving and lacks human driving functionality, the work vehicle **100** does not need to include the operation switches **210.**

### [2. Operation]

Now, an example operation of the work vehicle **100** will be described.

### [2-1. Self-driving operation]

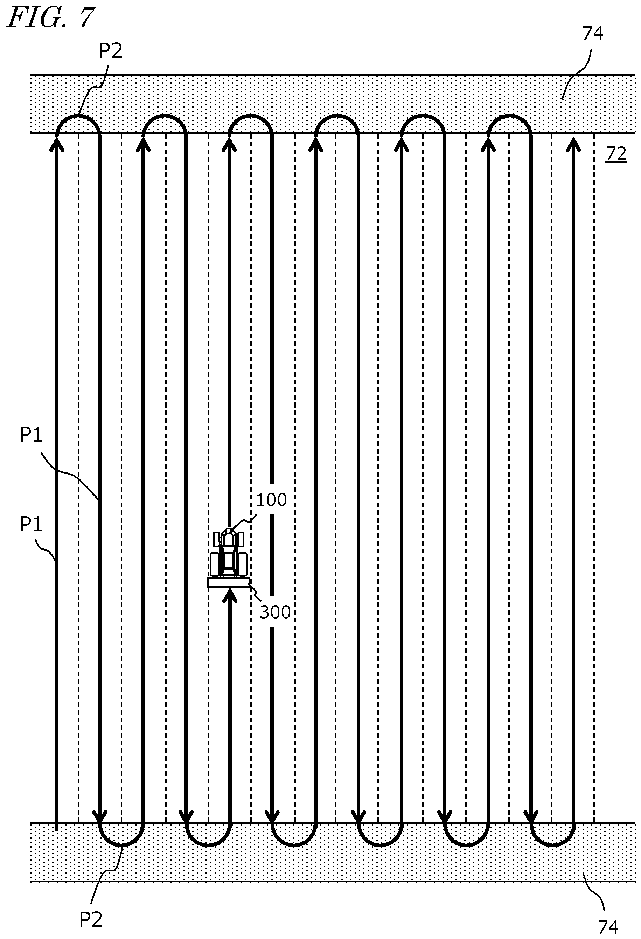

FIG. **7** is a diagram schematically showing an example of the work vehicle **100** automatically traveling along a target path in a field. In this example, the field includes a work area **72,** in which the work vehicle **100** performs a task by using the implement **300,** and headlands **74,** which are located near an outer edge of the field. The user may designate which regions on the map of the field would correspond to the work area **72** and the headlands **74** in advance. The target path in this example includes a plurality of main paths **P1** parallel to each other and a plurality of turning paths **P2** interconnecting the plurality of main paths **P1.** The main paths **P1** are located in the work area **72,** whereas the turning paths **P2** are located in the headlands **74.** Although each of the main paths **P1** in FIG. **7** is illustrated as a linear path, each main path **P1** may also include a curved portion(s). Broken lines in FIG. **7** depict the working breadth of the implement **300.** The working breadth is set previously and recorded in the storage device **170.** The working breadth may be set and recorded by the user manipulating the operational terminal **200.** Alternatively, the working breadth may be automatically recognized and recorded when the implement **300** is connected to the work vehicle **100.** The interval between the plurality of main paths **P1** may be set so as to be matched to the working breadth. The target path may be generated based on the manipulation made by the user, before self-driving is begun. The target path may be generated so as to cover the entire work area **72** in the field, for example. Along the target path shown in FIG. **7****,** the work vehicle **100** automatically travels while repeatedly reciprocating from a beginning point of work to an ending point of work. Note that the target path shown in FIG. **7** is merely an example, and the target path may be arbitrarily determined.

Now, an example control by the controller **180** during self-driving will be described.

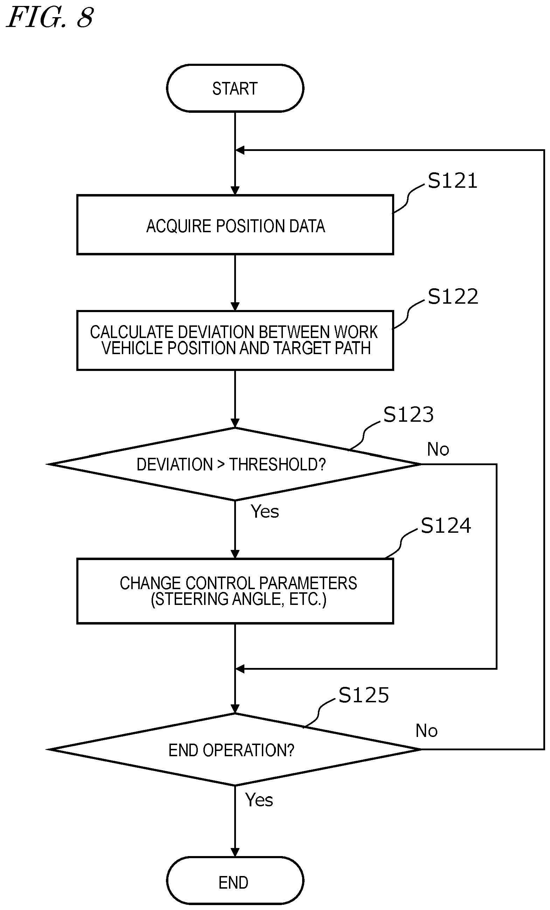

FIG. **8** is a flowchart showing an example operation of steering control to be performed by the controller **180** during self-driving. During travel of the work vehicle **100,** the controller **180** performs automatic steering by performing the operation from steps **S121** to **S125** shown in FIG. **8****.** The speed of the work vehicle **100** will be maintained at a previously-set speed, for example. First, during travel of the work vehicle **100,** the controller **180** acquires data representing the position of the work vehicle **100** that is generated by the positioning device **110** (step **S121**). Next, the controller **180** calculates a deviation between the position of the work vehicle **100** and the target path (step **S122**). The deviation represents the distance between the position of the work vehicle **100** and the target path at that moment. The controller **180** determines whether the calculated deviation in position exceeds the previously-set threshold or not (step **S123**). If the deviation exceeds the threshold, the controller **180** changes a control parameter of the steering device included in the drive device **240** so as to reduce the deviation, thus changing the steering angle (step **S124**). If the deviation does not exceed the threshold at step **S123,** the operation of step **S124** is omitted. At the following step **S125,** the controller **180** determines whether a command to end the operation has been received or not. The command to end the operation may be given when the user has instructed that self-driving be suspended through remote manipulations, or when the work vehicle **100** has arrived at the destination, for example. If the command to end the operation has not been given, the control returns to step **S121** and the controller **180** performs a similar operation based on a newly measured position of the work vehicle **100.** The controller **180** repeats the operation from steps **S121** to **S125** until a command to end the operation is given. The aforementioned operation is executed by the ECUs **182** and **184** in the controller **180.**

In the example shown in FIG. **8****,** the controller **180** controls the drive device **240** based only on the deviation between the position of the work vehicle **100** as identified by the positioning device **110** and the target path. Alternatively, a deviation in terms of directions may further be considered in the control. For example, when a directional deviation exceeds a previously-set threshold, where the directional deviation is an angle difference between the orientation of the work vehicle **100** as identified by the positioning device **110** and the direction of the target path, the controller **180** may change the control parameter (e.g., steering angle) of the steering device of the drive device **240** in accordance with the deviation.

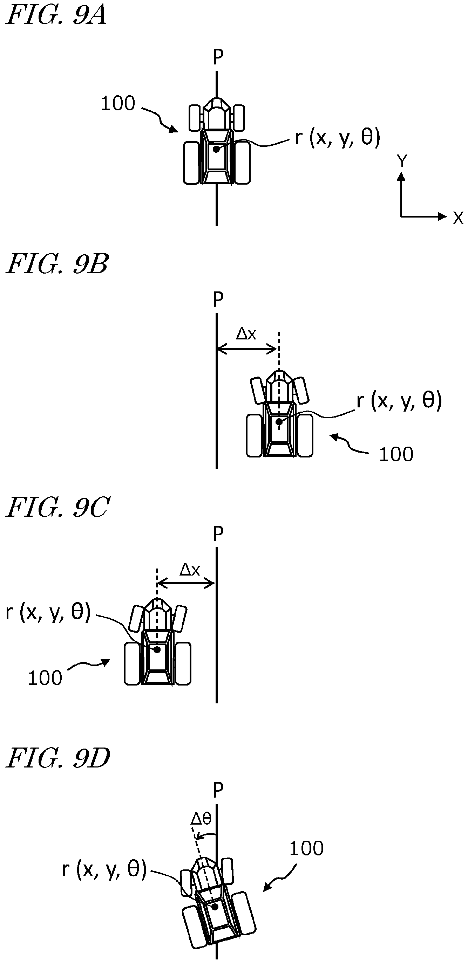

Hereinafter, with reference to FIGS. **9A** to **9D****,** an example of steering control by the controller **180** will be described more specifically.

FIG. **9A** is a diagram showing an example of the work vehicle **100** traveling along a target path **P.** FIG. **9B** is a diagram showing an example of the work vehicle **100** at a position which is shifted rightward from the target path **P.** FIG. **9C** is a diagram showing an example of the work vehicle **100** at a position which is shifted leftward from the target path **P.** FIG. **9D** is a diagram showing an example of the work vehicle **100** oriented in an inclined direction with respect to the target path **P.** In these figures, the pose, i.e., the position and orientation, of the work vehicle **100** as measured by the positioning device **110** is expressed as r (x, y, θ). Herein, (x,y) are coordinates representing the position of a reference point on the work vehicle **100** in an XY coordinate system, which is a two-dimensional coordinate system fixed to the globe. In the examples shown in FIGS. **9A** to **9D****,** the reference point on the work vehicle **100** is at a position, on the cabin, where a GNSS antenna is disposed, but the reference point may be at any arbitrary position. θ is an angle representing the measured orientation of the work vehicle **100.** Although the target path **P** is shown parallel to the Y axis in the examples illustrated in these figures, the target path **P** may not necessarily be parallel to the Y axis, in general.

As shown in FIG. **9A****,** in the case where the position and orientation of the work vehicle **100** are not deviated from the target path **P,** the controller **180** maintains the steering angle and speed of the work vehicle **100** without changing them.

As shown in FIG. **9B****,** when the position of the work vehicle **100** is shifted rightward from the target path **P,** the controller **180** changes the steering angle so that the traveling direction of the work vehicle **100** will be inclined leftward, thus bringing the work vehicle **100** closer to the path **P.** Herein, not only the steering angle but also the speed may be changed. The magnitude of the steering angle may be adjusted in accordance with the magnitude of a positional deviation Δx, for example.

As shown in FIG. **9C****,** when the position of the work vehicle **100** is shifted leftward from the target path **P,** the controller **180** changes the steering angle so that the traveling direction of the work vehicle **100** will be inclined rightward, thus bringing the work vehicle **100** closer to the path **P.** In this case, too, not only the steering angle but also the speed may be changed. The amount of change of the steering angle may be adjusted in accordance with the magnitude of the positional deviation Δx, for example.

As shown in FIG. **9D****,** in the case where the position of the work vehicle **100** is not considerably deviated from the target path **P** but its orientation is nonetheless different from the direction of the target path **P,** the controller **180** changes the steering angle so that the directional deviation Δθ will become smaller. In this case, too, not only the steering angle but also the speed may be changed. The magnitude of the steering angle may be adjusted in accordance with the magnitudes of the positional deviation Δx and the directional deviation Δθ, for example. For instance, the amount of change of the steering angle (which is in accordance with the directional deviation Δθ) may be increased as the absolute value of the positional deviation Δx decreases. When the positional deviation Δx has a large absolute value, the steering angle will be changed greatly in order for the work vehicle **100** to return to the path **P,** so that the directional deviation Δθ will inevitably have a large absolute value. Conversely, when the positional deviation Δx has a small absolute value, the directional deviation Δθ needs to become closer to zero. Therefore, it may be advantageous to introduce a relatively large weight (i.e., control gain) for the directional deviation Δθ in determining the steering angle.

For the steering control and speed control of the work vehicle **100,** control techniques such as PID control or MPC (Model Predictive Control) may be applied. Applying these control techniques will make for smoothness of the control of bringing the work vehicle **100** closer to the target path **P.**

Note that, when an obstacle is detected by one or more obstacle sensors **130** during travel, the controller **180** stops the work vehicle **100.** Alternatively, when an obstacle is detected, the controller **180** may control the drive device **240** so as to avoid the obstacle. Based on the data output from the LiDAR sensor **140,** the controller **180** is able to detect an object located at a relatively distant position from the work vehicle **100** (e.g., another vehicle, a pedestrian, etc.). By performing the speed control and steering control so as to avoid the detected object, the controller **180** can achieve self-traveling on public roads.

### [2-2. Recording of travel log data and generation of visualized data]

Now, an example of a process of recording travel log data and generating visualized data will be described.

In the present embodiment, the work vehicle **100** can automatically travel in an unmanned manner inside and outside the field. In the storage device **170,** information on the environment map including the field and public roads outside the field and on the target path is recorded previously. The environment map and the target path are generated by, for example, the controller **180** or the processor **560** of the management computer **500.** In the case of traveling on a public road, the work vehicle **100** travels along the target path while sensing the surroundings thereof by use of the sensing devices such as the cameras **120** and the LiDAR sensor **140,** with the implement **300** being raised.

During self-traveling of the work vehicle **100,** the ECU **185** in the controller **180** transmits data output from the positioning device **110** and image data output from the cameras **120** to the management computer **500** as travel log data. The processor **560** of the management computer **500** records the received travel log data in the storage device **550.**

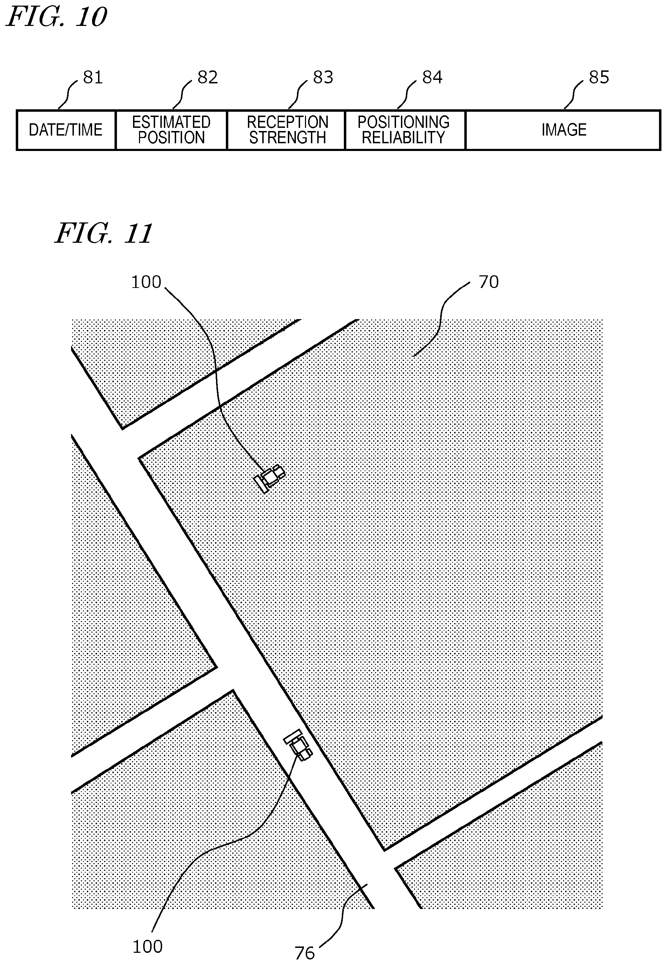

FIG. **10** is a diagram schematically showing an example of travel log data. The travel log data in this example includes information on date/time **81,** an estimated position **82** of the work vehicle **100,** a reception strength **83** of a satellite signal, positioning reliability **84** (reliability on positioning), and an image **85** of the surroundings of the work vehicle **100.** Among such information, the estimated position **82,** the reception strength **83** and the positioning reliability **84** are based on the GNSS data output from the positioning device **110.** The image **85** is image data output from the cameras **120,** that is, information in the sensing data. During travel of the work vehicle **100,** such travel log data may be transmitted from the work vehicle **100** and stored in the storage device **550.** The format of the travel log data shown in FIG. **10** is merely an example, and may be changed when necessary. For example, the travel log data does not need to include the information on the positioning reliability **84.** The information on the date/time **81** may be provided by the processor **560** of the management computer **500** instead of the controller **180.** The travel log data may include the identification number of the work vehicle **100.** In the case where the data output from the LiDAR sensor **140** is used as the sensing data, data such as point cloud data may be included in the travel log data instead of the image **85.**

Based on the travel log data, the processor **560** generates image data representing the surrounding environment of the work vehicle **100** as visualized data. The processor **560** generates the visualized data based on a predetermined condition. For example, the processor **560** may generate the visualized data when determining that reception interference has occurred. For example, the processor **560** can determine whether reception interference of a satellite signal is occurring or not based on the reception strength **83** or the positioning reliability **84** included in the travel log data shown in FIG. **10****.** Alternatively, the processor **560** may generate the visualized data when the user manipulates the terminal device **400** to request for generation of the visualized data.

FIG. **11** is a diagram schematically showing an example of state where a plurality of the work vehicles **100** are performing self-traveling inside a field **70** and on a road **76** outside the field **70.** During travel, each of the plurality of work vehicles **100** transmits travel log data to the management computer **500** at, for example, a certain cycle. The work vehicles **100** may each accumulate the travel log data in the storage device **170** at a relatively short cycle (e.g., every 0.1 seconds, etc.) and collectively transmit the travel log data to the management computer **500** every certain time period (e.g., every 1 second, every 10 seconds, etc.). The storage device **550** of the management computer **500** stores the travel log data transmitted from each work vehicle **100.** The processor **560** can generate visualized data at a specific point of time based on the travel log data for each work vehicle **100.**

An obstacle hindering the reception of a satellite signal may possibly exist in the environment in which the work vehicle **100** travels. Particularly in the case where the work vehicle **100** travels on the road **76,** there are often cases where the receipt of the satellite signal is hindered by the obstacle. The obstacle may be, for example, a tree along the road, a large vehicle, a high-rise building or the like. Among these obstacles, there may be an obstacle that was not present at the time when the target path was generated. For example, a plant such as a tree grows over time. Such a plant, even though not causing reception interference at the time of the generation of the target path, may possibly cause reception interference as a result of growing over time.

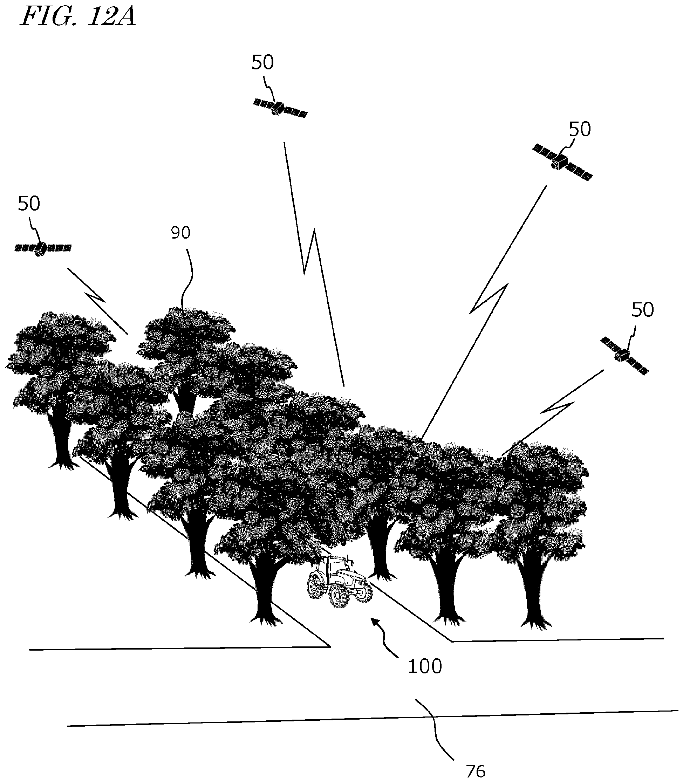

FIG. **12A** is a diagram showing an example of an environment in which reception interference occurs. In this example, the work vehicle **100** is automatically traveling along the road **76.** There are trees **90** grown thick near the travel path of the work vehicle **100.** Some branches of the trees **90** cover the work vehicle **100** and thus hinder the reception of the satellite signals. In such an environment, many of signals transmitted from satellites **50** are blocked by the branches of the trees **90.** As a result, the reception strengths of the satellite signals are decreased as a whole, resulting in decrease in the reliability of positioning.

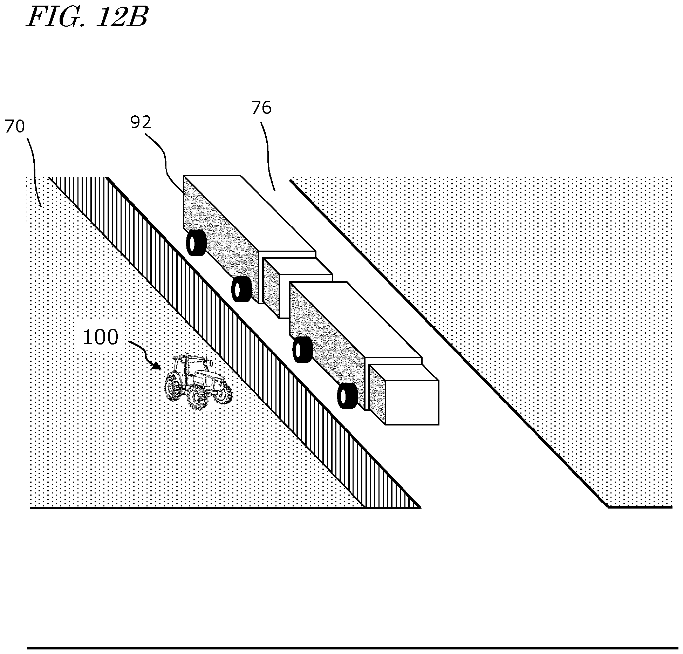

FIG. **12B** is a diagram showing another example of an environment in which reception interference occurs. In this example, the work vehicle **100** is automatically traveling in an area that is in the field **70** but is close to the road **76.** The field **70** is at a level lower than that of the road **76.** A large vehicle **92** such as a truck is at a stop on the road **76.** The large vehicle **92** blocks a portion of the signals from the satellites. As a result, the reception strengths of the portion of the satellite signals are decreased, and thus the reliability of positioning may possibly be decreased.

In such a state, the processor **560** of the management computer **500** detects that reception interference is occurring based on information indicating the receiving states of the satellite signals included in the log data acquired from the work vehicle **100.** For example, the processor **560** can detect that reception interference is occurring based on a value of the reception strength of each of the satellite signals.

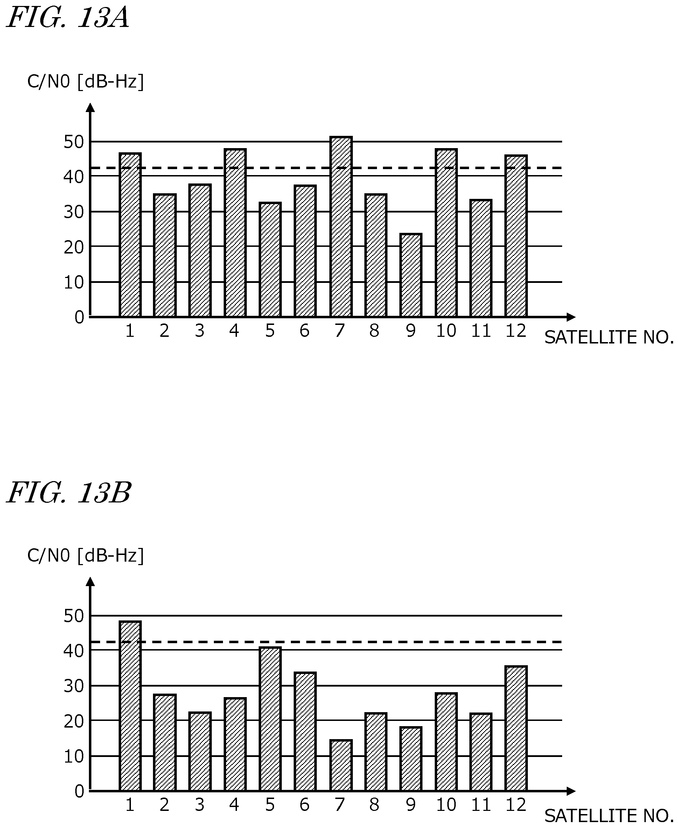

FIG. **13A** and FIG. **13B** are each a graph illustrating an example of a method for determining whether reception interference is occurring or not based on the values of the reception strengths of the satellite signals. FIG. **13A** shows an example of the reception strength of each of the satellite signals in the case where no reception interference is occurring. FIG. **13B** shows an example of the reception strength of each of the satellite signals in the case where reception interference is occurring. In these examples, satellite signals are received from 12 satellites, and the reception strength of each of the satellite signals is expressed by a value of C/NO. This is merely an example, and the number of the satellites from which the satellite signals may be received, and the manner of expression of the reception strength are varied in accordance with the system. The processor **560** can determine whether reception interference is occurring or not based on, for example, whether or not the number of the satellites, the reception strength of the satellite signal from which exceeds a previously-set reference value, is not smaller than a threshold value (e.g., four). In FIG. **13A** and FIG. **13B****,** an example of the reference value of the reception strength is shown by the broken line. It is now assumed that the threshold value is four. In the example shown in FIG. **13A****,** the reception strengths of the satellite signals from five satellites exceed the reference value. This is not smaller than the threshold value. In this case, the processor **560** can determine that no reception interference is occurring. By contrast, in the example of FIG. **13B****,** the reception strength of the satellite signal from one satellite exceeds the reference value. This is smaller than the threshold value. In this case, the processor **560** can determine that reception interference is occurring. This method of determination is merely an example. The processor **560** may determine whether reception interference is occurring or not by another method. For example, in the case where a value representing the reliability of positioning is transmitted from the work vehicle **100** as the travel log data as in the example of FIG. **10****,** the processor **560** may determine whether reception interference is occurring or not based on the value of the reliability.

In the case where reception interference is occurring, the processor **560** generates visualized data including information indicating the occurrence of the reception interference. For example, the processor **560** can generate, as visualized data, a message indicating that the reception strength is low and image data including information on the positions of the satellites at that moment. The information on the positions of the satellites is generated based on satellite position data acquired from the streaming server **600.** The satellite position data includes information on an orbit of each of the satellites. Based on the estimated position of the work vehicle **100** and the orbit of each satellite, the processor **560** can calculate the direction (e.g., the angle of elevation and the angle of direction) of each satellite as seen from the estimated position of the work vehicle **100.** Based on the calculated direction of each satellite, the processor **560** can generate visualized data representing an image including a mark that shows in which direction each satellite is located. The processor **560** transmits the visualized data from the communication device **590** to the terminal device **400** in response to, for example, a request from the terminal device **400.** The display device **430** of the terminal device **400** displays an image based on the received visualized data.

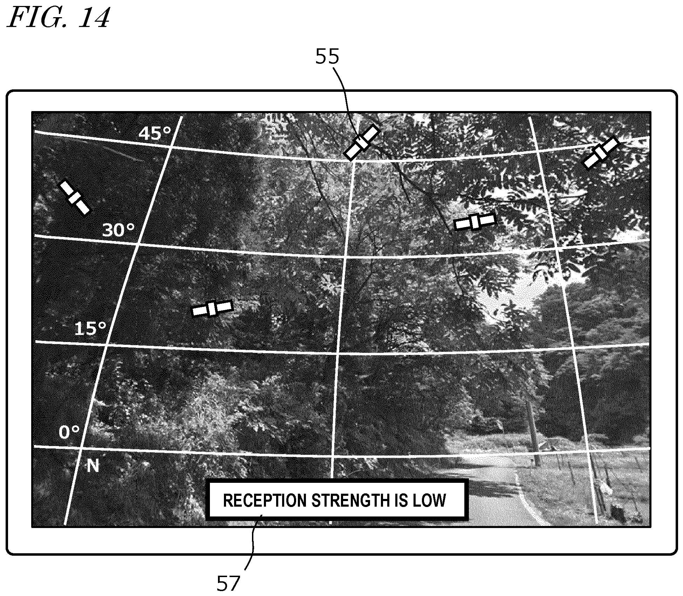

FIG. **14** shows an example of image displayed on the display device **430.** In this example, the image of the surrounding environment of the work vehicle **100** is superimposed by a pop-up **57** including a message that the reception strength is low and marks **55** representing the positions of the satellites at that moment. The pop-up **57** acts as a notice to the user that the reception interference is occurring. Display of such a notice can quickly notify the user, monitoring the work vehicle **100,** of the occurrence of the reception interference. The display device **430** may cause a loudspeaker to present an alarm sound, in addition to displaying the pop-up **57.** In the example of FIG. **14****,** the plurality of marks **55** representing the positions of the satellites are displayed as being superimposed on a video captured by the camera **120.** These marks **55** indicate in which direction the satellites are located at that moment. In the example of FIG. **14****,** white lines are displayed so that the user can grasp the angles of elevation and the angles of direction and thus easily grasp the positions of the satellites. Such a display allows the user to visually grasp which obstacle(s) in the image hinders the reception of the satellite signals. As a result, the user can take an action of, for example, re-setting the path of the work vehicle **100,** removing the obstacle from the path, or the like.

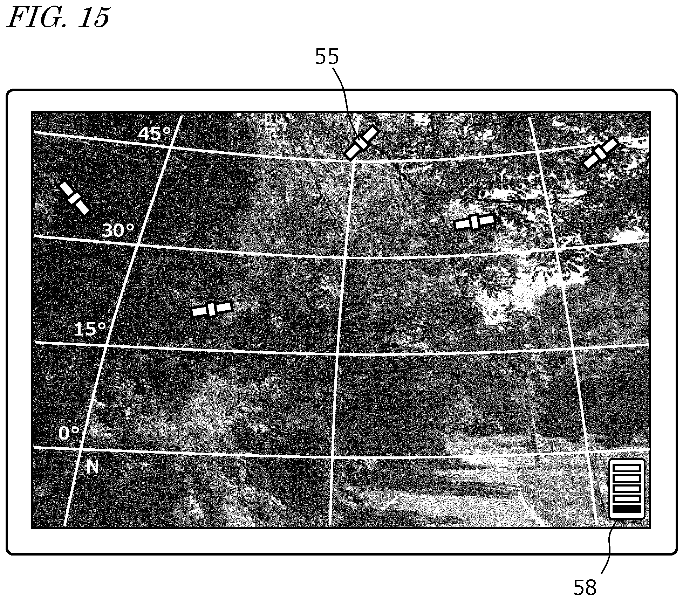

FIG. **15** shows another example of an image displayed on the display device **430.** In this example, a gauge **58** indicating a reception level of the satellite signals is displayed instead of the pop-up **57.** The processor **560** of the management computer **500** may generate visualized data expressing the occurrence of the reception interference or the decrease in the reception level by the gauge **58,** as in this example. In the example of FIG. **15****,** the reception level is 1 out of 5, which indicates that the receiving state is poor. The processor **560** can calculate or estimate the value of the reception level by use of, for example, a function or an estimation model by which the value of the reception strength of each of the plurality of satellite signals received from the work vehicle **100** is used as an input value.

The image shown in FIG. **14** or FIG. **15** may be constantly displayed on the display device **430** of the terminal device **400** during travel of the work vehicle **100,** or may be displayed on the display device **430** only while the reception interference is occurring. Such an image may be displayed only when the user of the terminal device **400** requests the management computer **500** to display the image. The user may manipulate the terminal device **400** to request the management computer **500** to generate visualized data at a specific date/time based on the log data collected when the work vehicle **100** was traveling in the past. The processor **560** of the management computer **500** can generate the above-mentioned visualized data based on the log data at the requested specific date/time and transmit the visualized data to the terminal device **400.**

The management computer **500** may transmit, to the terminal device **400,** first visualized data representing an image or the like of a site (position) where the value of the reception strength of the satellite signal is decreased to a predetermined value or lower and second visualized data representing an image or the like of the site captured in the past. The display device **430** of the terminal device **400** may display the image based on the first visualized data and the image based on the second visualized data side by side.

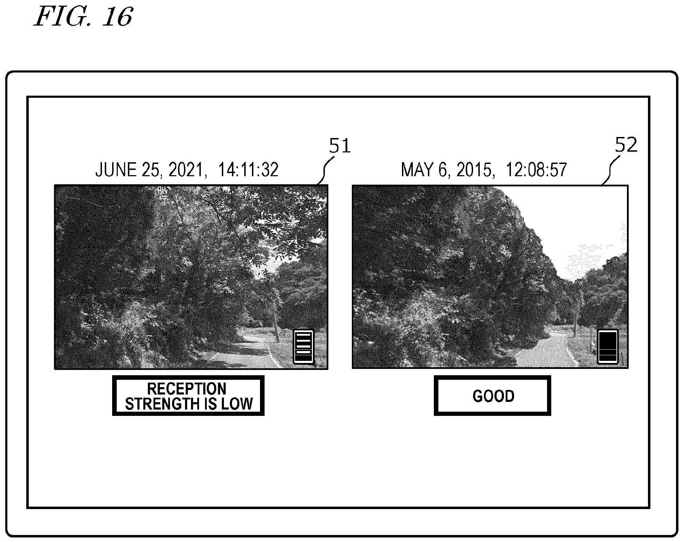

FIG. **16** shows an example of a display screen displaying a first image **51** based on the first visualized data and a second image **52** based on the second visualized data side by side. In the example of FIG. **16****,** the first image **51** and the second image **52** are each accompanied by the date/time when the image was captured and a message indicating whether the reception strength is low or good. In addition to such display, information such as a map or the like showing the site where the first image **51** and the second image **52** were captured may be displayed. In this example, the first image **51** based on the first visualized data newly acquired show a lot of trees. By contrast, the second image **52** based on the second visualized data captured in the past show a smaller number of trees or a smaller number of branches or leaves than the first image **51.** From this, the user can grasp that the branches and the leaves of the many trees shown in the first image **51** act as obstacles to decrease the reception strength.

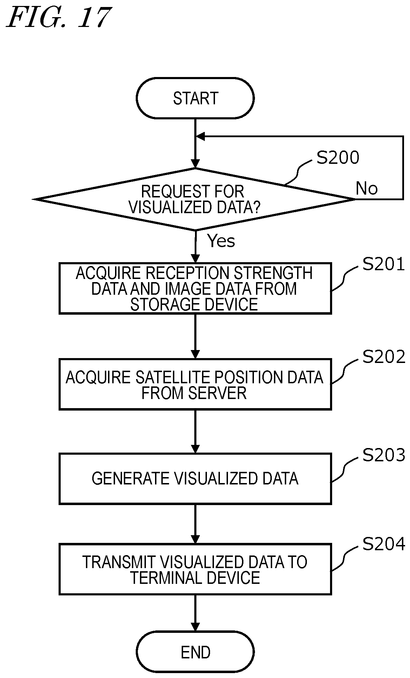

FIG. **17** is a flowchart showing an example operation of the processor **560** of the management computer **500** according to the present embodiment. In this example, upon receipt of a request for visualized data from the terminal device **400,** the processor **560** generates the visualized data. The processor **560** first determines whether a request for visualized data is received from the terminal device **400** or not (step **S200**). In the case where the request is received, the processor **560** acquires data on the reception strength of each of the satellite signals and image data generated by the cameras **120** from the log data recorded in the storage device **550** (step **S201**). Next, the processor **560** acquires satellite position data from the server **600** (step **S202**). Steps **S201** and **S202** may be performed in the opposite order. The processor **560** generates the visualized data based on the data on the reception strength, the image data and the satellite position data (step **S203**). For example, the processor **560** can generate, as the visualized data, image data including the information on the reception level and the information on the positions of the satellites as shown in FIG. **14** or FIG. **15****.** In this process, the processor **560** may generate visualized data representing a synthesized image generated by synthesizing images output from the plurality of cameras **120** disposed at different positions from each other. For example, the processor **560** may synthesize a plurality of images to generate visualized data representing a surround view image over 360° around the work vehicle **100.** Such visualized data allows the user to grasp the state of the surroundings of the agricultural machine **10** more precisely. The processor **560** transmits the generated visualized data to the terminal device **400** (step **S204**). The display device **430** of the terminal device **400** displays an image based on the received visualized data.

The above-described operation allows the user to look at the image based on the visualize data and check whether reception interference is occurring or not, as well as the surrounding environment of the work vehicle 100 and the positions of the satellites at that moment.

In the example shown in FIG. **17****,** the processor **560** generates the visualized data only when receiving a request for the visualized data. Instead of such an operation, the processor **560** may continuously perform the operation of steps **S201** to **S204** during, for example, self-traveling of the work vehicle **100.** In this case, the processor **560** generates, as the visualized data, data representing a motion picture of the surrounding environment of the work vehicle **100** during the period when the reception interference is occurring. The processor **560** outputs the visualized data when the reception interference is occurring and the visualized data when no reception interference is occurring, in distinguishable forms. For example, when the reception interference is occurring, the processor **560** may generate visualized data representing the image as shown in FIG. **14****;** whereas when no reception interference is occurring, the processor **560** may generate visualized data representing an image as shown in FIG. **14** excluding the pop-up **57.** Alternatively, the processor **560** may generate visualized data representing the image as shown in FIG. **15** so that it can be distinguished whether the reception interference is occurring or not based on the state of the gauge **58.** When no reception interference is occurring, the processor **560** may generate visualized data representing an image without the marks **55** representing the positions of the satellites.

As in the example shown in FIG. **16****,** the processor **560** may generate display data by which the image based on the first visualized data when the reception interference is occurring, and the image based on the second visualized data captured in the past when no reception interference was occurring, are displayed side by side. An image based on such display data allows the cause of the reception interference to be identified more easily.

The processor **560** may store the log data in the storage device **550** on only a portion of the period when the work vehicle **100** is automatically traveling, the portion including a period when reception interference is occurring. In this case, the processor **560** generates visualized data only on the portion of the period. Such an operation can suppress the amount of data to be recorded in the storage device **550.**

The processor **560** may be configured to output an alert signal when recognizing an object that causes reception interference in the image captured by the camera **120.** In the example shown in FIG. **14****,** it can be recognized that, for example, there are many trees in the image by a specific image recognition algorithm. Based on the satellite position data and the positions of the obstacles such as the trees recognized in the image, the processor **560** can estimate that reception interference is caused by the obstacles. In such a case, the processor **560** may, for example, transmit an alert signal to the terminal device **400.** Upon receipt of the alert signal, the processor **460** of the terminal device **400** may display a warning message on the display device **430** or present an alarm sound from the loudspeaker. This can alert the user. The processor **560** may transmit an alert signal to the work vehicle **100.** Upon receipt of the alert signal, the controller **180** of the work vehicle **100** may sound the buzzer **220,** activate a warning light, or stop traveling. This allows the work vehicle **100** to stop safely or allows people around the work vehicle **100** to be alerted when reception interference is occurring and thus the reliability of positioning is low.

In the above-described embodiment, image data generated by the cameras **120** is used as sensing data. Instead of, or in addition to, the image data, point cloud data output from the LiDAR sensor **140** may be used as the sensing data. The point cloud data represents a three-dimensional distribution of measurement points in the surrounding environment of the work vehicle **100.** Therefore, the processor **560** of the management computer **500** can generate visualized data representing the distribution of objects existing around the work vehicle **100** based on the point cloud data.

In the above-described embodiment, the terminal device **400** acquires visualized data and displays the acquired visualized data. The management system according to an embodiment of the present disclosure is not limited to having such a configuration. Alternatively, for example, the communication device **190** of the work vehicle **100** may acquire the visualized data and the operational terminal **200** may display the acquired visualized data.

At least a portion of the operations executed by the management computer **500** according to the above-described embodiment may be executed by the work vehicle **100** or the terminal device **400.** For example, the controller **180** in the work vehicle **100** or the processor **460** in the terminal device **400** may generate visualized data based on log data. In this case, the work vehicle **100** or the terminal device **400** acts as the management system according to the present disclosure.

Although the work vehicle **100** according to each of the above-described embodiments is a tractor, the techniques according to each embodiment are also applicable to vehicles other than tractors as well as to agricultural machines other than vehicles. For example, the techniques according to each embodiment may also be applied to harvesters, rice transplanters, vehicles for crop management, vegetable transplanters, mowers, mobile robots for agriculture, or other agricultural machines.

A device for performing self-driving control, transmission of log data, or generation of visualized data according to each of the above embodiments can be mounted on an agricultural machine lacking such functions as an add-on. Such a device may be manufactured and marketed independently from the agricultural machine. A computer program for use in such a device may also be manufactured and marketed independently from the agricultural machine. The computer program may be provided in a form stored in a non-transitory computer-readable storage medium, for example. The computer program may also be provided through downloading via telecommunication lines (e.g., the Internet).

### INDUSTRIAL APPLICABILITY

The techniques according to the present disclosure are applicable to a management systems for agricultural machines, such as tractors, harvesters, rice transplanters, vehicles for crop management, vegetable transplanters, mowers, seeders, spreaders, or agricultural robots, for example.

### REFERENCE SIGNS LIST

**10:** agricultural machine, **12:** GNSS receiver, **14:** sensing device, **20:** management system, **22:** storage device, **24:** processing unit, **30:** display device, **40:** server, **50:** GNSS satellites, **55:** satellite mark, **57:** pop-up, **58:** reception level gauge, **60:** reference station, **70:** field, **72:** work area, **74:** headland, **76:** road, **80:** network, **90:** trees, **92:** large vehicle, **100:** work vehicle, **101:** vehicle body, **102:** engine, **103:** transmission, **104:** tire, **105:** cabin **106:** steering device, **107:** driver's seat, **108:** linkage device, **110:** positioning device, **111:** GNSS receiver, **112:** RTK receiver, **115:** inertial measurement unit (IMU), **116** processing circuit, **120:** camera, **130:** obstacle sensor, **140:** LiDAR sensor, **150:** sensors, **152:** steering wheel sensor, **154:** angle-of-turn sensor, **156:** rotation sensor, **160:** control system, **170:** storage device, **180:** controller, **181, 182, 183, 184, 185:** ECU, **190:** communication device, **200:** operational terminal, **210:** operation switches, **220:** buzzer, **240:** drive device, **300:** implement, **340:** drive device, **380:** controller, **390:** communication device, **400:** terminal device, **420:** input device, **430:** display device, **450:** storage device, **460:** processor, **490:** communication device, **500:** management computer, **560:** processor, **570:** storage device, **590:** communication device, **600:** streaming server

## Claims

1. A management system, comprising:
a storage device to store, while an agricultural machine including an GNSS receiver is traveling, GNSS data output from the GNSS receiver and sensing data output from a sensing device to sense a surrounding environment of the agricultural machine in association with each other; and
a processing unit to generate and output visualized data, which represents the surrounding environment of the agricultural machine, based on the GNSS data and the sensing data, when reception interference of a satellite signal occurs.

2. The management system of claim 1, wherein the processing unit:
further generates visualized data, which represents the surrounding environment of the agricultural machine, based on the GNSS data and the sensing data, when the reception interference is not occurring; and
outputs the visualized data when the reception interference is occurring and the visualized data when the reception interference is not occurring, in distinguishable forms.

3. The management system of claim 2, further comprising a display device to display the visualized data when the reception interference is occurring and the visualized data when the reception interference is not occurring.

4. The management system of any one of claims 1 to 3, wherein when the reception interference occurs, the processing unit further generates and outputs visualized data, which represents the surrounding environment of the agricultural machine, based on the GNSS data and the sensing data, at least before or after a period when the reception interference is occurring.

5. The management system of claim 4, further comprising a display device to display the visualized data when the reception interference is occurring and the visualized data at least before or after the period when the reception interference is occurring.

6. The management system of any one of claims 1 to 5, wherein:
the storage device stores the GNSS data and the sensing data in association with points of time while the agricultural machine is traveling, and
the processing unit generates, as the visualized data, data representing a motion picture of the surrounding environment of the agricultural machine, based on the GNSS data and the sensing data at each of the points of time, in a period when the reception interference is occurring.

7. The management system of any one of claims 1 to 6, wherein the processing unit:
identifies the position of a satellite when the satellite signal is received, based on the GNSS data or satellite position data acquired from an external device; and
generates, as the visualized data, data representing an image including one or more marks, each representing the position of the satellite, superimposed on an image of the surrounding environment of the agricultural machine.

8. The management system of any one of claims 1 to 7, wherein the visualized data includes information representing a reception level of the satellite signal received by the GNSS receiver.

9. The management system of any one of claims 1 to 8, wherein:
the agricultural machine automatically travels based on the GNSS data;
the storage device stores the GNSS data and the sensing data during a portion of a time period when the agricultural machine is automatically traveling, the portion including a time period when the reception interference is occurring, and
the processing unit generates the visualized data during the portion of the time period.

10. The management system of any one of claims 1 to 9, wherein:
the GNSS data includes information representing a reception level of the satellite signal and an estimated position of the agricultural machine;
the sensing data includes information representing an image of the surrounding environment of the agriculture machine; and
the storage device stores a database including the reception level, the estimated position, the image and information about a point of time.

11. The management system of any one of claims 1 to 10, wherein the processing unit sends a notice to an external terminal device when the reception interference occurs.

12. The management system of any one of claims 1 to 11, wherein the sensing device includes at least one of a camera or a LiDAR sensor provided in the agricultural machine.

13. The management system of any one of claims 1 to 12, wherein:
the sensing device includes a plurality of cameras provided in the agricultural machine; and
the processing unit generates the visualized data by a process including synthesizing images output from the plurality of cameras.

14. The management system of any one of claims 1 to 13, wherein the processing unit recognizes based on the sensing data, an object that causes the reception interference in the environment, and outputs an alert signal when recognizing the object.

15. A method to be executed by a computer, the method comprising:
causing, while an agricultural machine including a GNSS receiver is traveling, a storage device to store GNSS data output from the GNSS receiver and sensing data output from a sensing device sensing a surrounding environment of an agricultural machine in association with each other; and
generating and outputting visualized data, which represents the surrounding environment of the agricultural machine, based on the GNSS data and the sensing data, when reception interference of a satellite signal occurs.
